# EUROPÄISCHE PATENTSCHRIFT

(11) **EP 3 511 451 B1**
(45) Veröffentlichungstag und Bekanntmachung des Hinweises auf die Patenterteilung: **18.11.2026**
(21) Anmeldenummer: 18151684.0
(22) Anmeldetag: 15.01.2018
(51) Int. Cl.: D01F 13/02, D01F 2/00, D01F 2/06

(54) **VERFAHREN ZUM WIEDERVERWENDEN EINES CELLULOSE UND SYNTHETISCHEN KUNSTSTOFF AUFWEISENDEN MISCHTEXTILS**
METHOD FOR REUSING A MIXED TEXTILE CONTAINING CELLULOSE AND SYNTHETIC PLASTIC
PROCÉDÉ DE RECYCLAGE D'UN PRODUIT TEXTILE MÉLANGÉ COMPORTANT DE LA CELLULOSE ET DE LA MATIÈRE PLASTIQUE SYNTHÉTIQUE

(43) Veröffentlichungstag der Anmeldung: 17.07.2019
(73) Patentinhaber: LENZING AKTIENGESELLSCHAFT, 4860 Lenzing (AT)
(72) Erfinder: Weilach, Christian, 4840 Vöcklabruck (AT); Herchl, Richard, 4910 Ried im Innkreis (AT); Klaus-Nietrost, Christoph, 4840 Vöcklabruck (AT)
(74) Vertreter: Dilg, Haeusler, Schindelmann Patentanwaltsgesellschaft mbH

(56) Entgegenhaltungen:
- EP-A1- 3 559 099
- WO-A1-2014/081291
- WO-A1-2017/019802
- US-A- 5 278 282
- BAHAREH ZAMANI ET AL: "A Carbon Footprint of Textile Recycling: A Case Study in Sweden", JOURNAL OF INDUSTRIAL ECOLOGY, 1 August 2015 (2015-08-01), New Haven, pages 676 - 687, XP055484757, Retrieved from the Internet <URL:http://publications.lib.chalmers.se/records/fulltext/146872.pdf> [retrieved on 20180615], DOI: 10.1111/jiec.12208
- ANNA PALME ET AL: "Development of an efficient route for combined recycling of PET and cotton from mixed fabrics", TEXTILES AND CLOTHING SUSTAINABILITY, 1 January 2017 (2017-01-01), pages 1 - 9, XP055675406, Retrieved from the Internet <URL:https://textclothsustain.springeropen.com/articles/10.1186/s40689-017-0026-9> [retrieved on 20200310], DOI: 10.1186/s40689-017-0026-9
- STAMM, G.; ULMANN, E.: "QUANTITATIVE ANALYSE VON FASERGEMISCHEN, I. TEIL: BINÄRE GEMISCHE", TEXTILVEREDLUNG, vol. 9, no. 12, 1974, pages 591 - 597

## Beschreibung

Die Erfindung betrifft ein Verfahren zum Recyceln eines Mischtextils und einen aus dem Mischtextil durch Weiterverarbeiten hergestellten regenerierten cellulosischen Formkörper.

Die Erfindung bezieht sich auf das technische Gebiet des Wiederverwendens (Recycling), insbesondere des Wiederverwendens von Mischtextilien, welche jeweils Cellulose und zumindest einen synthetischen Kunststoff aufweisen. Weiter insbesondere betrifft die Erfindung ein Wiederverwenden der Mischtextilien zum Herstellen eines regenerierten cellulosischen Formkörpers, insbesondere wobei die Cellulose des Formkörpers im Wesentlichen in Form von Lyocellfasern und/oder Viskosefasern vorliegt.

Als Viskosefasern werden Chemiefasern bzw. Regeneratfasern bezeichnet, die mittels eines Viskoseverfahren genannten Nassspinnverfahrens hergestellt werden. Der Ausgangsrohstoff des Viskoseverfahrens ist Cellulose, die auf der Basis von Holz bereitgestellt wird. Aus diesem Ausgangsrohstoff Holz wird die hochreine Cellulose in Form von Chemiezellstoff gewonnen. In aufeinanderfolgenden Prozessstufen wird der Zellstoff zuerst mit Natronlauge behandelt, wodurch sich Alkalicellulose bildet. Bei einer anschließenden Umsetzung dieser Alkalicellulose mit Schwefelkohlenstoff bildet sich Cellulose-Xanthogenat. Daraus wird durch weitere Zugabe von Natronlauge die Viskose-Spinnlösung erzeugt, die durch Löcher brausenartiger Spinndüsen in ein Spinnbad gepumpt wird. Dort entsteht durch Koagulation pro Spinndüsenloch ein Viskose-Filament. Die so hergestellten Viskose-Filamente werden im Anschluss zu Viskose-Stapelfasern geschnitten.

Lyocell bezeichnet eine Cellulose aufweisende Regeneratfasergattung, die nach einem Direkt-Lösemittelverfahren hergestellt wird. Die Cellulose wird für das Lyocell-Verfahren aus dem Rohstoff Holz extrahiert. Der so gewonnene Zellstoff kann anschließend in N-Methylmorpholin-N-oxid (NMMO), einem Lösungsmittel, durch Wasserentzug ohne chemische Modifizierung gelöst, filtriert und anschließend durch Spinndüsen gepresst werden. Die so geformten Filamente werden nach Passieren eines Luftspaltes in einem Bad mit wässriger NMMO-Lösung ausgefällt, und anschließend zu Stapelfasern geschnitten.

Bei der Verwendung von recycelten Materialien als Ausgangsstoffe für die Cellulose-Herstellung stellt sich oftmals das Problem der Reinheit dieser Ausgangsstoffe. Diese sind häufig mit nicht holztypischen Materialien verunreinigt. Insbesondere sind z.B. heutige Alttextilien und/oder Reste aus der Kleidungsherstellung stark mit Kunststoffen belastet. Einerseits, weil Sie aus Kunststoffen bestehen. Andererseits aber auch, weil heutzutage viele vorwiegend aus Naturfasern wie Cellulose bestehenden Alttextilien partiell mit Kunststoffanteilen belastet sind. Dies sind beispielsweise Elastane aus Gummizügen oder Polyester aus Nähgarnen. In diesem Zusammenhang können Textilien, welche sowohl Cellulose als auch einen synthetischen Kunststoff aufweisen, als Mischtextilien bezeichnet werden.

Bislang wird bei einem Recycling von Ausgangsstoffen wie z.B. Alttextilien, insbesondere Mischtextilien, durch teilweise komplexe Verfahrensschritte versucht, möglichst alle Beimengungen bzw. Fremdstoffe zu entziehen, um als "neuen" Rohstoff wieder möglichst reine Cellulose zur Verfügung zu stellen. Diese Verfahrensschritte können z.B. umfassen: Bleichung, chemische Trennung und mechanisches Separieren. Diese Verfahrensschritte sind oft sehr kostenintensiv und aufwändig. Auf der anderen Seite sind Verfahren bekannt, um synthetischen Kunststoff, z.B. Polyethylenterephthalat (PET), als Rohstoff wiederzugewinnen. Hierbei kommen jedoch hauptsächlich Prozesse zum Einsatz, bei welchen Cellulose abgereichert oder zerstört wird. Beispielsweise beschreibt das Dokument WO 2014045062 A1 ein Verfahren zum Extrahieren von Polyester aus einem Gegenstand unter Verwendung eines Lösungsmittelsystems.

WO 2017/019802 A1 betrifft ein Verfahren und ein System zum Verarbeiten von gemischtem Textilien-Ausgangsmaterial, Isolieren von (Cellulose und Polyester) Molekülen, und Regenerieren von Cellulosefasern und Polyesterfasern. Ein Gemisch aus Textilien wird, nach einer Vorbehandlung, getrennt in Baumwoll-Mischungen und Polyester-Mischungen. Baumwolle und Polyester werden getrennt voneinander in Cellulose- bzw. Polyestermoleküle aufgelöst und liegen nach einem weiteren Filterschritt jeweils in einer flüssigen Lösung vor.

Bahareh Zamani et al.: "A carbon footprint of textile recycling: a case study in Sweden", Journal of Induatrial Ecology, 1. August 2015, Seiten 676-687; untersucht und vergleicht "Patagonia Prozess" und "NMMO Prozess". Bei dem Patagonia Prozess handelt es sich um das Lösen und Wiederverwenden von Polyester mit DMT.

WO 2014/081291 A1 betrifft ein Verfahren zum Regenerieren von Cellulosefasern aus einem Textil, welches sowohl Cellulose als auch synthetische Fasern aufweist. Zunächst wird das Textil mit einem Cellulose-Lösungsmittel behandelt, um die Cellulose zu lösen. Danach wird die Cellulose-enthaltende Flüssigphase von den synthetischen Fasern getrennt. Zuletzt wird die Cellulose-enthaltende Flüssigphase einem Spinnprozess zugeführt, um Cellulosefasern zu produzieren.

EP 3 559 099 A1 betrifft ein Verfahren zur Abtrennung von Cellulose und Polyester aus einem Material, das eine Mischung aus Cellulose und Polyester enthält, wie z.B. Baumwolle/Polyester, Viskose/Polyester, und Lyocell Faser/Polyester.

Anna Palme et al.: "Development of an efficient route for combined recycling of PET and cotton from mixed fabrics", Textiles and Clothing Sustainability, 1. Januar 2017, Seiten 1-9; beschreibt, dass Polyester mittels 5-15 wt% NaOH und Hydrolyse gelöst wird, während Cellulose mittels Filtrieren erhalten werden kann.

Für die Herstellung von Cellulose zum Einsatz in Recycling-Verfahren, welche z.B. ein Lyocell-Verfahren oder ein Viskose-Verfahren verwenden, können Recycling-Materialien (Ausgangsstoffe) verwendet werden. Bei der Aufbereitung dieser Ausgangsstoffe, z.B. Mischtextilien, fallen bei der Schließung eines Stoffkreislaufes verschiedene unerwünschte Fremdstoffe an, welche bei der Herstellung eines recycelten Formkörper, z.B. einer Faser, entfernt werden müssen. Dies u.a. deswegen, damit die chemisch/physikalischen Eigenschaften einer recycelten Faser gegenüber denen einer nicht nicht-recycelten Faser genügend ähnlich werden.

Es ist eine Aufgabe der vorliegenden Erfindung, in ressourcensparender und nachhaltiger Weise ein Mischtextil zu recyceln, so dass ein Formkörper mit spezifischen Eigenschaften hergestellt werden kann.

Diese Aufgabe wird durch die Gegenstände gemäß den unabhängigen Patentansprüchen gelöst. Bevorzugte Ausgestaltungen ergeben sich aus den abhängigen Patentansprüchen.

Gemäß einem Aspekt der vorliegenden Erfindung ist ein Verfahren zum Recyceln eines Mischtextils beschrieben. Das Verfahren weist auf:
i) Zuführen des Mischtextils, wobei das Mischtextil cellulosische Fasern und synthetische Fasern aufweist, wobei die synthetischen Fasern zumindest einen synthetischen Kunststoff aufweisen;
ii) Abreichern des synthetischen Kunststoffs von der Cellulose,
   wobei das Abreichern aufweist: teilweises Behalten eines synthetischen Kunststoffs in dem Mischtextil,
   wobei das Mischtextil einen ersten synthetischen Kunststoff aufweist, wobei das Mischtextil einen zweiten synthetischen Kunststoff aufweist, und wobei das Abreichern ferner aufweist:
      iia) Abreichern von dem ersten synthetischen Kunststoff auf einen ersten Konzentrationswert, und
      iib) Abreichern von dem zweiten synthetischen Kunststoff auf einen zweiten Konzentrationswert,
   wobei der erste Konzentrationswert größer als der zweite Konzentrationswert ist; und
iii) Weiterverarbeiten des abgereicherten Mischtextils nach dem Abreichern.

Gemäß einem weiteren Aspekt der vorliegenden Erfindung ist ein regenerierter cellulosischer Formkörper beschrieben, welcher gemäß dem oben beschriebenen Verfahren hergestellt ist. Der Formkörper ist hierbei ausgewählt aus der Gruppe, welche besteht aus Filamenten, Fasern, einer Folie, einem Gewebe, einem Vlies, einer (Mikro)kugel, Beads und einem Schwamm. Weiterhin weist der Formkörper Cellulose, insbesondere Cellulose und synthetischen Kunststoff, auf, welche zumindest teilweise aus dem abgereicherten Mischtextil stammt. Ferner weist der Formkörper zumindest eines der unten beschriebenen Merkmale auf.

Im Rahmen dieser Anmeldung kann unter dem Begriff "Cellulose" insbesondere eine organische Verbindung verstanden werden, die Bestandteil pflanzlicher Zellwände ist oder synthetisch hergestellt werden kann. Cellulose ist ein Polysaccharid (d.h. ein Vielfachzucker). Cellulose ist unverzweigt und weist typischerweise mehrere hundert bis zehntausende β-D-Glucose-Moleküle (β-1,4-glycosidische Bindung) bzw. Cellobiose-Einheiten auf. Aus Cellulosemolekülen werden von Pflanzen kontrolliert Cellulosefasern aufgebaut. Mit einem technischen Prozess können Cellulosemoleküle unter Bildung von Regeneratfasern zusammengelagert werden, zum Beispiel als reißfeste Fasern. Im Rahmen dieser Anmeldung kann unter dem Begriff "Formkörper" insbesondere ein zwei- oder dreidimensionaler geometrischer Körper verstanden werden, der ein Resultat eines Verfahrens zum Herstellen bzw. Wiedergewinnen von Cellulose ist. Insbesondere kann unter einem Formkörper ein zwei- oder dreidimensionales Objekt verstanden werden, das Cellulose aufweist oder daraus besteht und aus gelöstem Zellstoff hergestellt wird. Formkörper können insbesondere Lyocell-Formkörper, Viskose-Formkörper oder Modal-Formkörper sein. Typische Formkörper sind Filamente, Fasern, Schwämme und/oder Filme. Grundsätzlich eignen sich alle Arten von Celluloseformkörpern für Ausführungsbeispiele der Erfindung. Dabei sind als Fasern sowohl Endlosfilamente als auch geschnittene Stapelfasern mit herkömmlichen Abmessungen (zum Beispiel 38 mm Länge) und Kurzfasern zu verstehen. Zur Herstellung von Fasern kommen dabei sowohl Verfahren mit Abzugseinrichtungen nach einer oder mehreren Extrusionsdüsen als auch andere Verfahren, wie insbesondere Melt-Blowing-Verfahren, in Frage. Alternativ zu Fasern kann als Formkörper auch eine Cellulose aufweisende Folie hergestellt werden, d.h. ein flächiger und im Wesentlichen homogener Film mit oder aus Cellulose. Folien können insbesondere dadurch hergestellt werden, dass durch Einstellung der Prozessparameter eines Lyocell-Verfahrens ein Koagulieren zumindest teilweise erst nach Auftreffen der Filamente auf einer Aufnahmefläche ausgelöst wird. Unter Folien können flächige Celluloseformkörper verstanden werden, wobei die Dicke dieser Folien einstellbar ist (zum Beispiel durch Auswahl einer Anzahl seriell angeordneter Düsenbalken). Andere Ausführungsformen eines Formkörpers sind ein Gewebe und ein Vlies aus Cellulosefilamenten bzw. aus Cellulosefasern, insbesondere ein Spinnvlies aus integral miteinander verschmolzenen ("merging") im Wesentlichen kontinuierlichen Cellulosefilamenten ("melt blown"). Hierbei kann unter einem Gewebe insbesondere ein textiles Flächengebilde aus mindestens zwei (vorzugsweise rechtwinklig oder nahezu rechtwinklig) verkreuzten Fadensystemen (oder Fasersystemen) verstanden werden, wobei Fäden (oder Fasern) in Längsrichtung als Kettfäden und Fäden (oder Fasern) in Querrichtung als Schussfäden bezeichnet werden können. Ein Vlies oder Nonwoven kann als ungeordnetes (insbesondere in Wirrlage vorliegendes) Gebilde aus Filamenten oder Fasern oder geschnittenen Garnen begrenzter Länge bezeichnet werden, die zu einer Faserschicht oder einem Faserflor zusammengefügt und (insbesondere reibschlüssig) miteinander verbunden sind. Ein Formkörper kann auch in der Gestalt einer Kugel geschaffen werden. Als Formkörper können auch Cellulose aufweisende Partikel, wie insbesondere Beads (d.h. ein Granulat bzw. Kügelchen) oder Flakes, bereitgestellt werden, die in dieser Form weiterverarbeitet werden können. Mögliche Celluloseformkörper sind also auch partikuläre Strukturen wie Granulat, sphärische Pulver oder Fibride. Eine Formgebung eines Formkörpers erfolgt bevorzugt durch die Extrusion einer cellulosehaltigen Spinnlösung durch eine Extrusionsdüse, da auf diese Weise große Mengen der Celluloseformkörper mit sehr einheitlicher Form hergestellt werden können. Ein weiterer möglicher Celluloseformkörper ist ein Schwamm oder allgemeiner ein poröser Formkörper. Die genannten Formkörper können gemäß exemplarischen Ausführungsbeispielen zum Beispiel zur Herstellung von Garnen, Textilien, Gelen oder Verbundwerkstoffen verwendet werden.

Im Rahmen dieser Anmeldung kann unter dem Begriff "Cellulosequelle" insbesondere ein Medium (insbesondere ein Festkörpermedium) verstanden werden, das als Basis zum Herstellen eines Cellulose aufweisenden Formkörpers während eines entsprechenden Herstellungsverfahrens das hierfür verwendete Cellulosematerial bereitstellt. Ein Beispiel ist Holz bzw. Holzzellstoff.

Im Rahmen dieser Anmeldung kann unter dem Begriff "Lyocell-Verfahren" insbesondere ein Verfahren zum Herstellen von Cellulose nach einem Direkt-Lösemittelverfahren verstanden werden. Die Cellulose kann für das Lyocell-Verfahren aus einem Ausgangsstoff gewonnen werden, der diese Cellulose enthält. Der Ausgangsstoff kann bei dem Lyocell-Verfahren in einem geeigneten Lösungsmittel (insbesondere aufweisend tertiäre Aminoxide wie zum Beispiel N-Methylmorpholin-N-oxid (NMMO) und/oder ionische Flüssigkeiten, d.h. niedrig schmelzende Salze, die aus Kationen und Anionen aufgebaut sind) gelöst werden. Das Lösen kann insbesondere durch Wasserentzug und/oder ohne chemische Modifizierung erfolgen. Die erhaltene Lösung, die auch als Dope oder Spinnlösung bezeichnet werden kann, kann bei dem Lyocell-Verfahren anschließend durch eine oder mehrere Spinndüsen gepresst werden. Dadurch gebildete Filamente können während und/oder nach ihres freien oder gesteuerten Fallens durch einen Luftspalt in einem wasserhaltigen Bad (insbesondere in einem Bad mit wässriger NMMO-Lösung) und/oder in dem Luftspalt befindliche Luftfeuchtigkeit ausgefällt werden.

Im Rahmen dieser Anmeldung kann unter dem Begriff "Viskoseverfahren" insbesondere ein Verfahren zum Herstellen von Cellulose nach einem Nassspinnverfahren verstanden werden. Die Cellulose kann für das Viskoseverfahren aus einem Ausgangsstoff (insbesondere Holz oder ein Holzzellstoff) gewonnen werden, der diese Cellulose enthält. In aufeinanderfolgenden Prozessstufen kann bei dem Viskoseverfahren der Ausgangsstoff zuerst mit einer Base (zum Beispiel mit Natronlauge) behandelt werden, wodurch sich Alkalicellulose bildet. Bei einer anschließenden Umsetzung dieser Alkalicellulose mit Schwefelkohlenstoff bildet sich Cellulose-Xanthogenat. Daraus kann durch weitere Zugabe einer Base (insbesondere von Natronlauge) eine Viskose-Spinnlösung erzeugt werden, die durch eine oder mehrere Spinndüsen gepresst werden kann. In einem Spinnbad entstehen durch Koagulation Viskose-Filamente.

Im Rahmen dieser Anmeldung kann unter dem Begriff "Reste aus einer Kleidungsherstellung" insbesondere Ausschuss und/oder Verschnitt eines Cellulose aufweisenden oder daraus bestehenden Textils oder Garnes verstanden werden, wobei diese Reste während eines Verfahrens zum Herstellen von Kleidung anfallen. Beim Herstellen von Kleidung wird zum Beispiel ein Cellulose aufweisendes Textil als Ausgangsstoff hergestellt, aus dem dann flächige Teile (zum Beispiel in Form einer T-Shirt-Hälfte) ausgeschnitten werden. Übrig bleiben Reste, die gemäß einem exemplarischen Ausführungsbeispiel wieder einem Verfahren zum Herstellen eines Cellulose aufweisenden Formkörpers zugeführt werden können. Bei Resten aus einer Kleidungsherstellung kann es sich also um einen Cellulose aufweisenden oder daraus bestehenden Ausgangsstoff handeln, der zum Wiedergewinnen von Cellulose verwendet werden kann, bevor ein Verbraucher die Reste als Kleidung oder in anderer Weise verwendet hat. Reste aus einer Kleidungsherstellung können insbesondere aus im Wesentlichen reiner Cellulose gebildet sein, insbesondere ohne separate und nicht Cellulose aufweisende Fremdkörper (wie zum Beispiel Knöpfe, Textildruck oder Nähte).

Im Rahmen dieser Anmeldung können unter dem Begriff "Altkleider" insbesondere Cellulose aufweisende Kleidungsstücke verstanden werden, die bei Rückgewinnung zumindest eines Teils der Cellulose bereits von einem Verbraucher benutzt (insbesondere getragen) worden sind. Bei Altkleidern kann es sich also um einen Cellulose aufweisenden Ausgangsstoff handeln, der erhebliche Mengen von Fremdstoffen aufweisen kann (aber nicht muss) und zum Wiedergewinnen von Cellulose verwendet werden kann, nachdem ein Verbraucher die Altkleider als Kleidung oder in anderer Weise verwendet hat. Altkleider können insbesondere aus einer Mischung aus Cellulose und einem oder mehreren Fremdstoffen gebildet sein, insbesondere aufweisend (insbesondere bei Kleidungsstücken häufig verwendeten) synthetischen Kunststoff (wie zum Beispiel Polyester und/oder Elastan) und/oder separate und nicht Cellulose aufweisende Fremdkörper (wie zum Beispiel Knöpfe, Textildruck oder Nähte). Unter Polyester werden insbesondere Polymere mit Esterfunktionen (R-[-CO-O-]-R) in ihrer Hauptkette verstanden. Zu Polyestern gehören Polycarbonate und Polyethylenterephthalat. Unter Elastan wird insbesondere eine dehnbare Chemiefaser mit hoher Elastizität verstanden. Ein Elastan zugrundeliegendes Blockcopolymer kann einen Massenanteil von mindestens 85 % Polyurethan enthalten.

Im Rahmen dieser Anmeldung kann unter dem Begriff "Mischtextil" insbesondere ein Textil verstanden werden, welches mehr als eine Komponente aufweist bzw. aus zumindest zwei Komponenten besteht. Textilien können z.B. Reste aus einer Kleidungsherstellung oder Altkleider sein (siehe Beschreibung unten). Ein Textil kann aus einer Komponente bestehen, z.B. aus Baumwolle oder einem synthetischen Kunststoff. Ein Mischtextil wiederum weist zumindest zwei verschiedene solcher Komponenten auf. So kann ein Mischtextil z.B. Baumwolle und einen synthetischen Kunststoff aufweisen. Ferner kann ein Mischtextil Cellulose, insbesondere Baumwoll-Cellulose, und Polyester, insbesondere Polyethylenterephthalat (PET) aufweisen. Ebenso kann ein Mischtextil auch mehr als zwei Komponenten, beispielsweise Cellulose, Polyester und Polyamid, aufweisen. Gemäß einem weiteren Beispiel kann ein Mischtextil (Baumwoll)Cellulose, PET und Elastan aufweisen. Die Komponenten können auch als Fasern beschrieben werden. So kann ein Mischtextil cellulosische Fasern und synthetische Fasern aufweisen. Die synthetischen Fasern können zumindest einen synthetischen Kunststoff aufweisen.

Im Rahmen dieser Anmeldung kann unter dem Begriff "synthetischer Kunststoff" insbesondere ein Stoff verstanden werden, welcher aus Makromolekülen aufgebaut ist und synthetisch hergestellt wird. Die jeweiligen Makromoleküle eines Kunststoffes sind Polymere und daher aus wiederholenden Grundeinheiten (Wiederholeinheiten) aufgebaut. Die Größe der Makromoleküle eines Polymers kann zwischen einigen tausend bis über eine Million Grundeinheiten variieren. Beispielsweise besteht das Polymer Polyethylen (PE) aus aneinander verbundenen, sich vielfach wiederholenden Ethyleneinheiten. Hierbei können die Polymere unverzweigte, verzweigte oder vernetzte Moleküle sein. Kunststoffe können bezüglich ihrer physikalischen Eigenschaften im Prinzip in drei Gruppen unterteilt werden: Thermoplaste, Duroplaste und Elastomere. Ferner können diese Eigenschaften auch in Untergruppen kombiniert sein, z.B. bei thermoplastischen Elastomeren. Wichtige Merkmale von Kunststoffen sind ihre technischen Eigenschaften, wie Formbarkeit, Härte, Elastizität, Bruchfestigkeit, Temperatur-, Wärmeformbeständigkeit und chemische Beständigkeit, die sich durch die Wahl der Makromoleküle, Herstellungsverfahren und in der Regel durch Beimischung von Additiven in weiten Grenzen variieren lassen. Typische Reaktionen zum Herstellen von synthetischem Kunststoff aus Monomeren oder Pre-Polymeren sind: Kettenpolymerisation, Polyaddition oder Polykondensation. Beispiele für synthetische Kunststoffe, welche insbesondere auch in Textilien verwendet werden, sind z.B. Polyurethan (PUR), insbesondere als Bestandteil von Elastan, Polyester (PE, z.B. Polyethylenterephthalat (PET)), Polyamid (PA, z.B. Nylon, Perlon) und Polyether, insbesondere Polyethylenglykol (PEG) als Bestandteil von Elastan.

Im Rahmen dieser Anmeldung kann unter dem Begriff "Elastan" insbesondere ein synthetischer Kunststoff verstanden werden, welcher thermoplastische und elastische Eigenschaften aufweist. Elastan kann daher als thermoplastisches Elastomer (TPE) bezeichnet werden. Elastan kann als Block-Copolymer vorliegen, welches insbesondere durch die folgenden beiden Blöcke gekennzeichnet ist: Polyurethan (PUR) und Polyethylenglycolether (PEG). Hierbei können die PUR Segmente steife Abschnitte bilden, welche sich mit weichen, elastischen PEG Abschnitten abwechseln. PUR kann steife, gestreckte Abschnitte bilden, die sich längs zueinander anlagern und durch den Aufbau von Nebenvalenzkräften den Zusammenhalt z.B. einer Faser ermöglichen. Die gummiartigen PEG Blöcke (z.B. jeweils etwa 40 bis 50 Monomereinheiten) können hingegen stark zusammengeknäult vorliegen, wobei diese aber auch gestreckt werden können. Hierbei kann Elastan als Kräuselstruktur mit sehr hoher Dehnbarkeit (mehrere 100 %, z.B. 700 %) vorliegen. Die Dichte kann z.B. zwischen 1,1 und 1,3 g/cm³ betragen und die Festigkeit beispielsweise 5 bis 12 cN/tex. Die Elastizität kann hierbei temperaturabhängig sein. Ferner können unter dem Begriff "Elastan" sowohl Elastan selbst, als auch verwandte thermoplastische Elastomere (z.B. Elastollan, Desmopan, Texin und Utechllan) verstanden werden.

Im Rahmen dieser Anmeldung kann unter dem Begriff "Abreichern" insbesondere ein Prozess verstanden werden, mittels welchem eine Komponente aus einer Mischung von zumindest zwei Komponenten zumindest teilweise entfernt wird. Beispielsweise kann ein Mischtextil die Komponenten Cellulose und PET aufweisen. Wird nun der Anteil der Komponente PET reduziert, so kann dies als Abreichern von PET bezeichnet werden. Es sind eine Vielzahl von Möglichkeiten bekannt ein solches Abreichern durchzuführen. Zunächst kann dies mechanisch erfolgen, z.B. durch Dichte-Trennung. Zusätzlich oder stattdessen kann das Abreichern mittels einem chemischen Trennen durchgeführt werden. Beispiele hierfür sind ein Hydrolysieren oder Derivatisieren der abzureichernden Komponente. Weiterhin kann die abzureichernde Komponente mittels eines Lösungsmittels entfernt werden. Bei dem Abreichern kann die abzureichernde Komponente abgebaut bzw. zerstört werden. Weiterhin kann die abzureichernde Komponente nach dem Abreichern in ihrer ursprünglichen Form, also nichtabgebaut, vorliegen.

Gemäß einem exemplarischen Ausführungsbeispiel der Erfindung wird der Nachteil überwunden, dass bei einem Abreichern von Cellulose aus einem Mischtextil diese mehr oder weniger stark abgebaut wird und somit nicht mehr für nachfolgende Verfahren (z.B. ein Lyocell-Verfahren oder ein Viskose-Verfahren) wiederverwendet werden kann. Um einen synthetischen Kunststoff (beispielsweise den Polyester PET) von Cellulose zu trennen gibt es bislang verschiedene Verfahren, bei welchen Cellulose abgereichert oder abgebaut wird.

Gemäß einer Ausführung der Erfindung hat sich nun gezeigt, dass durch das selektive Lösen bzw. Abreichern von synthetischem Kunststoff (z.B. PET) aus Mischtextilien, welche synthetischen Kunststoff und Cellulose aufweisen, sowohl der synthetische Kunststoff als auch die Cellulose in hinreichend guter Qualität zurückgewonnen werden können. Dies kann zudem dadurch wirtschaftlich möglich gemacht werden, dass Mischtextilien mit geringerem Kunststoff (PET)-Gehalt verwendet werden.

Gemäß einem exemplarischen Ausführungsbeispiel der Erfindung wurde erstaunlicherweise gefunden, dass durch eine gezielte Steuerung von Restkonzentrationen im Rahmen eines Wiederverwendens eines Mischtextils (inklusive des Recyclingprozesseses, beziehungsweise der Aufbereitung des Ausgangsstoffs) neue Eigenschaften in einem herzustellenden (Lyocell)-Formkörper bzw. dessen textilen Folgeprodukten erreicht werden können. Diese so erreichte Funktionalisierung von Restkonzentrationen aus einem Mischtextil, welche auf thermoplastischen Kunststoffen basieren, kann eine Vielzahl vorteilhafter Eigenschaften, z.B. Festigkeit oder Elastizität, bereitstellen.

Gemäß einem exemplarischen Ausführungsbeispiel der Erfindung kann es diese so erreichte Funktionalisierung von Restkonzentrationen aus einem Mischtextil, welche auf thermoplastischen Elastomeren wie Elastan basieren, erlauben überraschenderweise eine effiziente Kompensation von (negativen) Eigenschaftsveränderungen, welche sich insbesondere durch den Anteil von recycelten Cellulosefasern in einem herzustellenden (Lyocell)-Formkörpers ergeben können.

Gemäß einem exemplarischen Ausführungsbeispiel der Erfindung können synthetische Kunststoffe, welche zu großen Mengen in Textilien eingesetzt werden, zumindest teilweise abgereichert werden, um Cellulose als Rohstoff für ein Recyclingverfahren zu erhalten. Allerdings ist nicht zwingend eine vollständige Abreicherung des Kunststoffs notwendig, sondern ein jeweils zu bestimmender Anteil (zumindest teilweises Abreichern) des synthetischen Kunststoffs kann in dem Mischtextil verbleiben. Dies kann bei einem herzustellenden Cellulose aufweisenden Formkörper zu gezielt steuerbaren erwünschten Eigenschaften führen.

Während es bislang darum ging aus Textilien mit hohem Kunststoffanteil besonders viel synthetischen Kunststoff zurückzugewinnen (wobei Cellulose als Abfallprodukt anfällt), wird gemäß einem exemplarischen Ausführungsbeispiel der Erfindung im Gegenteil ein Mischtextil mit einem eher geringeren Kunststoffanteil als Ausgangsstoff zur vorrangigen Gewinnung von Cellulose und eben nicht zur Gewinnung von synthetischem Kunststoff eingesetzt. Auf diese Weise kann Cellulose effizient gewonnen werden.

Gemäß einem vorteilhaften Ausführungsbeispiel muss hierbei nicht der gesamte Kunststoff abgereichert werden, sondern ein geringer Teil kann zum Weiterverarbeiten in dem Mischtextil verbleiben. Überraschenderweise kann ein geringer Restanteil von (bestimmtem) synthetischem Kunststoff in einem herzustellenden Cellulose aufweisenden Formkörper nicht nur störungsfrei akzeptiert werden, sondern kann sogar vorteilhafte Eigenschaften wie z.B. eine erhöhte Stabilität und/oder eine verbesserte Elastizität bereitstellen.

Zusammengefasst wird also gemäß einem Ausführungsbeispiel der Erfindung der Umstand genutzt, dass ein Mischtextil, welches Cellulose und synthetischen Kunststoff aufweist, durch Abreichern (z.B. selektives Lösen und Abscheiden der Polymeranteile in einem Lösungsmittel, insbesondere einem Lösungsmittel, welches Cellulose nicht abbaut) des Kunststoffs als ressourcenschonender und nachhaltiger Cellulose-Ausgangsstoff wiederverwendet werden kann. Aus diesem Cellulose-Ausgangsstoff kann, z.B. mittels eines Lyocell- oder Viskose-Verfahrens, ein regenerierter cellulosischer Formkörper hergestellt werden.

Gemäß einem Ausführungsbeispiel kann der aus dem Mischtextil als Ausgangsstoff hergestellte Formkörper, z.B. mittels Lyocell- oder Viskose-Verfahren, aufgrund eines Restanteils an bestimmtem synthetischem Kunststoff spezifische, erwünschte Eigenschaften aufweisen.

Im Weiteren werden zusätzliche Ausführungsbeispiele des Verfahrens und des Formkörpers beschrieben.

Gemäß einem Ausführungsbeispiel ist der synthetische Kunststoff zumindest einer aus der Gruppe, welche besteht aus Polyester, Polyamid, Polyurethan, Elastan und Polyether. Dies kann den Vorteil haben, dass industrierelevante Kunststoffe, welche zu großen Mengen in Textilien eingesetzt werden, zumindest teilweise abgereichert werden können, um Cellulose als Ausgangsstoff für ein Wiederverwenden zu erhalten. Die genannten Kunststoffe können zudem bei einem herzustellenden Cellulose aufweisenden Formkörper zu gezielt steuerbaren erwünschten Eigenschaften führen.

Beispiele für synthetische Kunststoffe, welche insbesondere auch in Mischtextilien verwendet werden, sind z.B. Polyester (PE, z.B. Polyethylenterephthalat (PET)), Polyamid (PA, z.B. Nylon, Perlon), Polyurethan (PUR), insbesondere als Bestandteil von Elastan, und Polyether, insbesondere Polyethylenglykol (PEG) als Bestandteil von Elastan. Gemäß einem Ausführungsbeispiel wird insbesondere PET abgereichert, welches in vielen Mischtextilien in großer Menge vorliegen kann. Zudem können größere Anteile von PET in einem Mischtextil für ein Recycling-Verfahren bzw. für einen herzustellenden Formkörper unerwünschte Eigenschaften hervorrufen.

Gemäß einem weiteren Ausführungsbeispiel stammt die Cellulose des Mischtextils aus Baumwolle. Dies kann den Vorteil haben, dass ein industrierelevanter Stoff, welcher in sehr großen Mengen in Mischtextilien vorkommt, direkt verwendet werden kann. Weiterhin werden ökologische Vorteile bereitgestellt, denn die Produktion von Baumwolle ist sehr ressourcen-intensiv.

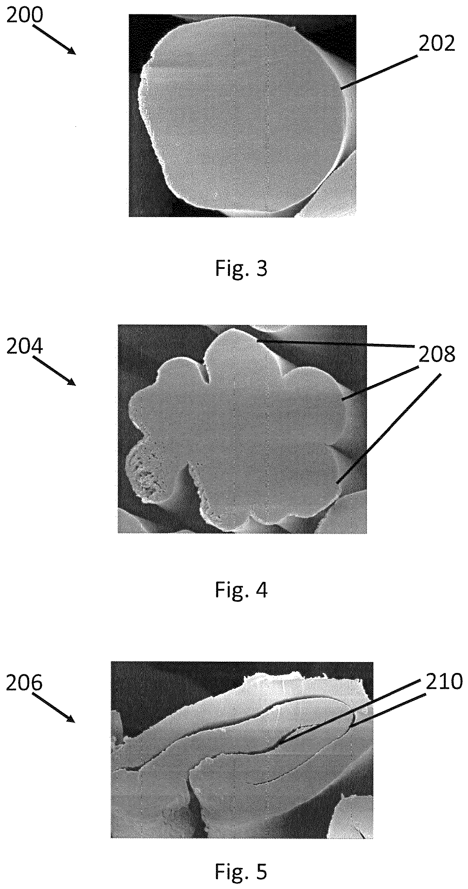

Eine Vielzahl von Mischtextilien weist Cellulose in Baumwoll-Form auf (siehe hierzu die Beschreibung von Figur 5 unten). Diese Baumwoll-Cellulose unterscheidet sich im Phänotyp als auch in den physikalischen Eigenschaften von Lyocell- und Viskose-Cellulose. Beispielsweise benötigt Baumwoll-Cellulose Fasern kein zusätzliches Mattierungsmittel (z.B. Titanoxid), während Lyocell- und Viskose-Cellulose Fasern ohne ein solches Mittel, insbesondere im feuchten Zustand, durchscheinend sein können.

Gemäß einem weiteren Ausführungsbeispiel kann der Ausgangsstoff ganz oder teilweise Reste aus einer Kleidungsherstellung und/oder Altkleider (zum Beispiel Mischtextilien) aufweisen. Anders ausgedrückt können als zumindest ein Teil des Ausgangsstoffs Textilien, insbesondere Reste aus einer Kleidungsherstellung und/oder Altkleider, verwendet werden. Besonders bevorzugt ist das Heranziehen von Resten aus der Kleidungsherstellung, da derartiger Verschnitt bzw. Ausschuss häufig einen sehr hohen Celluloseanteil und somit einen hohen Reinheitsgrad aufweist. Insbesondere kann ein solches Pre-Consumer-Textil frei von Fremdkörpern, wie Knöpfen, Nähten oder Textildruck sein. Zum Beispiel können Reste aus der Kleidungsherstellung im Wesentlichen gewobene (und optional gefärbte) Cellulose aufweisen, sodass solche Reste bedarfsweise auch direkt in Lösung überführt werden können, um daraus mittels des Lyocell Verfahrens Cellulose rückzugewinnen. Bei Altkleidern oder Post-Consumer-Textilien können größere Fremdkörper wie Knöpfe, Drucke und Nähte bereits beim oder nach dem mechanischen Zerkleinern abgetrennt werden. Andere Fremdstoffe der Reste oder Altkleider, wie zum Beispiel Farben und synthetische Kunststoffe (wie Polyester und Elastan), können vor dem Lösen eines entsprechenden Ausgangsstoffs zum Bilden des Dopes bzw. der Spinnlösung ganz oder teilweise entfernt werden, können aber auch ganz oder teilweise in der Spinnlösung verbleiben.

Gemäß einem weiteren Ausführungsbeispiel weist das Verfahren ferner auf: Reinigen der Cellulose, wobei das Reinigen zwischen dem Abreichern und dem Weiterverarbeiten stattfindet. Dies kann den Vorteil bringen, dass besonders hochwertige Cellulose für ein Recycling-Verfahren bereitgestellt werden kann.

Ein solches Reinigen kann zum Beispiel zumindest ein Teil von synthetischem Kunststoff entfernen, falls dies gewünscht ist. Beispielsweise kann auf diese Weise der Anteil von synthetischem Kunststoff in dem herzustellenden Formkörper eingestellt bzw. beeinflusst werden. Das Reinigen entspricht hierbei nicht dem eigentlichen Abreichern, sondern dient als zusätzlicher Verfahrensschritt dazu, (bestimmten) synthetischen Kunststoff, welcher beispielsweise nicht fest gebunden ist, zu entfernen und/oder Kunststoffreste abzuwaschen. Ferner kann das Reinigen ein zumindest teilweises Entfernen von Farbstoffen durch Bleichen aufweisen. Dadurch ist es möglich, das Mischtextil ganz oder teilweise zu entfärben, beispielsweise um weiße oder graue Formkörper herzustellen. Weiterhin kann das Mischtextil zumindest teilweise von Fasern-vernetzenden Vernetzern befreit werden. In Anwendungen, in denen solche Vernetzer zwischen den Fasern des Mischtextils vorliegen, können die Fasern mittels einer alkalischen oder einer sauren Vorbehandlung von diesen Vernetzern ganz oder teilweise befreit werden.

Gemäß einem weiteren Ausführungsbeispiel weist das Abreichern in dem Verfahren ferner auf: selektives Abreichern zumindest eines synthetischen Kunststoffs aus dem Mischtextil. Hierbei kann der synthetische Kunststoff insbesondere einer aus der Gruppe sein, welche besteht aus Polyamid, Polyester, Polypropylen, Polyurethan und Elastan. Dies kann den Vorteil bereitstellen, dass Kunststoff-Anteile in einem Mischtextil, welches in einem Recycling-Verfahren weiterverwendet werden soll, gezielt zu beeinflussen bzw. zu steuern, um spezifische Eigenschaften in einem herzustellenden Formkörper zu erhalten.

Bestimmte synthetische Kunststoffe können während eines Recycling-Verfahrens, insbesondere einem Lyocell-Verfahren, störende Eigenschaften aufweisen.

Gemäß einem exemplarischen Ausführungsbeispiel kann PET selektiv aus dem Mischtextil abgereichert werden. So kann ein bearbeitetes Mischtextil, welches als kleinteiliges Gewebe/Fasergemisch vorliegt, einerseits bei Temperaturen von 120° bis 190° C mit Tetrahydrofuran (THF) unter Druck behandelt werden, wobei PET selektiv in Lösung geht. Es kann eine Polymerkonzentration im Lösungsmittel von max. 10% eingestellt werden, da ansonsten die Viskosität in einem Nachfolgeprozess zu hoch werden würde. Eine Filterung von dem Rückstand ist dann kaum mehr möglich. Für diese Variante ist insbesondere eine angepasste Temperaturführung zur Erreichung des gewünschten finalen PET-Anteils besonders wichtig. So kann das Maß des Abbaus gesteuert und eine relativ genaue finale PET-Konzentration eingestellt werden.

Gemäß einem weiteren exemplarischen Ausführungsbeispiel kann die Lösung von PET durch Lösungsmittel erzielt und die Fällung bei Temperaturen unterhalb des Schmelzpunktes von PET (ungefähr in dem Bereich zwischen 180° C und 220° C) ausgeführt werden. Als Lösungsmittel kann z.B. ein Dicarbonsäuredialkylester oder ein Dicarbonsäuredialkylester-Gemisch verwendet werden. Weiterhin kann als Lösungsmittel z.B. ein Dimethylester oder ein Diethylester der Oxalsäure, Malonsäure, Bernsteinsäure, Glutarsäure und/oder Adipinsäure verwendet werden. Als Fällmittel können unpolare Substanzen wie aliphatische Kohlenwasserstoffe oder Gemische wie Petrolether und Benzine verwendet werden. Insbesondere können als Fällmittel n-Alkane und/oder iso-Alkane verwendet werden.

Gemäß einem weiteren exemplarischen Ausführungsbeispiel wird Cellulose (mit optionalem Polyamid (PA) Anteil) abfiltriert und das Filtrat wird durch Destillation aufkonzentriert, so dass eine Fließfähigkeit erhalten bleibt. Die konzentrierte Lösung wird durch Einbringen in für PET nicht als Lösemittel taugliche, jedoch mit THF mischbare Flüssigkeiten (insbesondere Methanol, Ethanol, Kohlenwasserstoffe von c5 (Pentan) bis c10 (Gasolin/Diesel)) ausgefällt. Nach Filtration und Trocknung kann PET in feinkörniger Form als vollwertiger Rohstoff zur Verfügung stehen, da durch das beschriebene Verfahren kein Abbau des Polyesters stattfindet.

In einem Mischtextil kann auch Polypropylen (PP) vorkommen. Dieses stammt z.B. aus non-woven Anteilen, wie Vliesfutterstoffen aus Bekleidungen oder ähnlichen Materialien. Beispielsweise in einem Lyocell-Verfahren kann aber PP eine deutliche Störung des Prozesses bewirken, denn PP ist in NMMO unlöslich und kann bei der folgenden Herstellung eines Lyocell-Formkörpers ein Verstopfen von Filtern auslösen.

Gemäß einem exemplarischen Ausführungsbeispiel können die PP-Anteile durch mechanische Flotation selektiv abgereichert werden (PP-Dichte beträgt etwa 0,75 bis 0,9 kg/L, die Dichte der weiteren Kunststoffe deutlich über 1,0 kg/L).

Gelingt dies nicht, kann PP gemäß einem weiteren exemplarischen Ausführungsbeispiel vorab in einer ersten Stufe selektiv durch aromatische Lösungsmittel (z.B. Toluol, Xylol, Trimethylbenzol, Ethylbenzol, Cumol), bei Temperaturen um bis zu 150° C, aus dem Gemisch abgereichert (gelöst) werden. Diese Vorabscheidungsvariante von PP ist deshalb von besonderem Interesse, weil Cellulose, PET, PA und PUR in dem aromatischen Lösungsmittel unlöslich sind. In einer zweiten Stufe kann dann der PET-Anteil wie oben beschrieben reduziert werden, wobei die Prozesse ohne vorheriges komplettes entfernen des vorhergehenden Lösungsmittels ineinandergreifen könnten, da das letztlich resultierende Lösungsmittelgemisch sicher und gut durch fraktionierte Destillation zu trennen sein kann.

In einer weiteren Ausführungsform wird bei der Alttextilverwertung eine primäre Reduktion der polymeren Bestandteile angestrebt. Dabei kann z.B. PP durch Flotationsverfahren in hohem Masse abgetrennt (selektiv abgereichert) werden. Weiter können durch eine Hydrolyse im pH-Bereich von unter 7 Polyamide (PA) bzw. Polyacrylnitril (PAN) abgetrennt (selektiv abgereichert) werden. Durch das oben beschriebene Lösen können dann schließlich die weiteren Polyesteranteile selektiv abgereichert werden. Diese vorgeschalteten Selektionsmechanismen erlauben gemäß einer Ausführung der Erfindung eine Ressourcen- und Aufwandsreduktion eines Recycling-Verfahrens.

Durch die Aufbereitung des Mischtextil gemäß einer Ausführung der Erfindung kann sichergestellt werden, dass verbleibende (bis zu einem gewünschten Grad abgereicherte) Kunststoffe wie PUR, PA, PET, Polyester usw. in der geeigneten Konzentration zum Weiterverwenden in einem Recycling-Verfahren, wie einem Lyocell-Verfahren, verbleiben. Wenn dies erreicht wird, können die sich in einer Spinnlösung eines Lyocell-Verfahrens befindlichen Kunststoff-Anteile ähnlich einem Verbundsystem Faser-Thermoplast auswirken.

In einer bevorzugten Ausführungsform können in Mischtextilien durch selektives Abreichern der vorhandenen residualen Kunststoffe die gewünschten Anteile von z.B. PET und PUR eingestellt werden. Der nach Zugabe eines solchen aufbereiteten Mischtextils hergestellte recycelte (Lyocell)-Formkörper kann in seinen Eigenschaften einem nicht-recycelten Lyocell-Formkörper ähnlich bzw. nahezu ident sein. Insbesondere können diese Eigenschaften durch zusätzliche Beigabe von recyceltem Lyocell-Gewebe noch weiter an die Eigenschaften einer nicht-recycelten Lyocellfaser angenähert werden, wodurch messtechnisch kein Unterschied mehr feststellbar ist.

In den beschriebenen Fällen können die Lösungsmittel durch fraktionierte Destillation weitestgehend rückgewonnen werden. Somit sind die beschriebenen Abreicherungsprozesse besonders vorteilhaft im Sinne von geschlossenen Stoffkreisläufen und Ressourcennutzung.

Gemäß einem weiteren Ausführungsbeispiel weist das Abreichern des Verfahrens ferner auf: vollständiges Entfernen zumindest eines synthetischen Kunststoffs aus dem Mischtextil. Hierbei kann der synthetische Kunststoff insbesondere Polyester und/oder Elastan sein. Dies kann den Vorteil haben, dass das abgereicherte Mischtextil besonders rein vorliegt und unerwünschte Eigenschaften damit deutlich reduziert sein können.

Einige synthetische Kunststoffe, z.B. Polyester (PET), Elastan oder Polypropylen, können chemisch/physikalische Eigenschaften aufweisen, welche in einem Recycling-Verfahren besonders störend sein können. So kann z.B. eine Unlöslichkeit in einer Spinnlösung als Hauptproblem angesehen werden. Entsprechend vorteilhaft kann ein abgereichertes Mischtextil sein, welches diese negativen Eigenschaften nicht mit in ein Verfahren zum Weiterverwenden (z.B. Lyocell-Verfahren) überführt.

Gemäß einem weiteren Ausführungsbeispiel weist das Abreichern des Verfahrens ferner auf: zumindest teilweises Behalten eines synthetischen Kunststoffs in dem Mischtextil. Hierbei kann der synthetische Kunststoff insbesondere einer aus der Gruppe sein, welche besteht aus Polyamid, Polyester, Polyurethan und Elastan. Dies kann den Vorteil haben, dass ein synthetischer Kunststoff nicht mehr besonders sauber bzw. rein abgereichert werden muss. Das Abreichern von kleinen Restkonzentrationen kann nämlich technisch durchaus herausfordernd und ressourcenintensiv sein kann.

Stattdessen kann synthetischer Kunststoff, z.B. Polyurethan, in dem Mischtextil verbleiben, wodurch aufwendige und kostenintensive Abreicherungsprozesse verringert werden können bzw. gar nicht mehr notwendig sind. Wenn zumindest ein Teil des Polyurethans Elastan zugeordnet ist, können zusätzlich noch weitere Vorteile erreicht werden, wie z.B. eine Verbesserung der Festigkeitswerte und/oder der Elastizität des herzustellenden Formkörpers.

Es können geringe Anteile (z.B. unter 2%) von z.B. Polyamiden und Polyestern in dem Recycling-Verfahren mitverarbeitet werden, um eine gute Einbindung in Cellulose zu erreichen. In einem Recycling-Verfahren kann dies ein deutlicher Vorteil sein, denn das zumindest teilweise Entfernen von weiteren synthetischen Polymeren, insbesondere in geringen Konzentrationen, kann unverhältnismäßig aufwändig sein. Die oben genannten weiteren synthetischen Kunststoffe können in Ausgangsstoffen wie Textilien sehr häufig und verbreitet enthalten sein. Daher stellt eine Akzeptanz geringer Restmengen eine massive Erleichterung eines Recycling-Verfahrens dar.

Gemäß einem weiteren Ausführungsbeispiel weist das Mischtextil einen ersten synthetischen Kunststoff auf, insbesondere Polyamid und/oder Polyurethan. Das Mischtextil weist auch einen zweiten synthetischen Kunststoff auf, insbesondere Polyester, weiter insbesondere Polyethylenterephthalat (PET) und/oder Polypropylen. Zudem weist das Abreichern ferner auf: i) zumindest teilweises Abreichern von dem ersten synthetischen Kunststoff auf einen ersten Konzentrationswert, ii) zumindest teilweises Abreichern von dem zweiten synthetischen Kunststoff auf einen zweiten Konzentrationswert. Hierbei ist nun der erste Konzentrationswert von dem zweiten Konzentrationswert verschieden, insbesondere größer. Dies hat den Vorteil, dass das technisch aufwendige und kostenintensive Abreichern eines weiteren Kunststoffs zumindest teilweise entfällt. Stattdessen kann die Anwesenheit zumindest eines weiteren synthetischen Kunststoffs sogar die Eigenschaften der herzustellenden Faser in vorteilhafter Weise beeinflussen bzw. steuern.

Beispielsweise kann eine hohe Konzentration von Polyester, insbesondere PET, und/oder PP für den Recyclingprozess des Mischtextils unerwünscht sein. Weiterhin kann jedoch der Einsatz von z.B. PA und/oder PUR, letzteres insbesondere als Bestandteil von Elastan, nicht zwingend unerwünscht sein. So können, wie in diesem Dokument beschrieben, PA, PUR bzw. Elastan teilweise vorteilshafte Eigenschaften wie die Verbesserung der Festigkeit einer Faser bereitstellen. Auf diese Weise kann z.B. der erste Konzentrationswert einer Konzentration von Polyester oder PP entsprechen, welcher möglichst gering gehalten werden soll. Weiterhin kann z.B. der zweite Konzentrationswert einer Konzentration von PA oder PUR entsprechen, wobei eine Konzentration in gewissen Bereichen vorteilhaft sein kann. Somit kann die Konzentration von Polyester/PP möglichst niedrig eingestellt werden, während die Konzentration von PA/PUR höher eingestellt werden kann. Dies stellt jedoch nur ein Beispiel dar und eine Vielzahl verschiedener Kombinationen von Kunststoffen und Konzentrationen sind möglich. So kann unter Berücksichtigung der zu erzielenden Eigenschaften eines herzustellenden Formkörpers eine Vielzahl von spezifischen Konzentrationen eingestellt werden.

Gemäß einem weiteren Ausführungsbeispiel weist das Abreichern des Verfahrens zumindest eines der beiden im Folgenden beschriebenen Trennverfahren auf.

Ein mechanisches Trennen, insbesondere aufgrund des Dichte-Unterschieds der Materialien.

Ein chemisches Trennen, welches zumindest eines aus der Gruppe aufweist, welche besteht aus Hydrolysieren, Derivatisieren und Verwenden eines Lösungsmittels. Gemäß einem bevorzugten Ausführungsbeispiel wird ein Lösungsmittel verwendet, welches die Cellulose nicht zersetzt. Beispielsweise kann eine alkalische Kochung mit Natriumhydroxid (NaOH) durchgeführt werden, um Rest-Polyester abzubauen und die Kettenlänge der Cellulose-Moleküle einzustellen.

Gemäß einem weiteren Ausführungsbeispiel weist das Verfahren ferner auf: Zuführen von zumindest einem weiteren Mischtextil, welches Cellulose und zumindest einen synthetischen Kunststoff aufweist, wobei der Anteil an synthetischem Kunststoff in dem Mischtextil und in dem weiteren Mischtextil verschieden ist, derart dass eine erhaltende Kunststoff-Zusammensetzung zumindest eine vorbestimmte Eigenschaft aufweist. Dies hat den Vorteil, dass im Wesentlichen ohne zusätzlichen Einsatz von chemischen Verfahren die gewünschten Anteile von synthetischem Kunststoff entsprechend eingestellt bzw. beeinflusst werden können.

In einer bevorzugten Ausführungsform werden in Ausgangsstoffen enthaltene Restbestandteile von synthetischem Kunststoff auf eine spezifische Menge eingestellt. Ein nach Zugabe von mehreren spezifischen Ausgangsstoffen hergestellte Cellulose aufweisende Formkörper kann dann gewünschte Kunststoff-Konzentrationen bzw. Zusammensetzungen und entsprechend spezifische chemisch/physikalische Eigenschaften aufweisen. Dies können beispielsweise Eigenschaften sein, welche denen einer nicht-recycelten Lyocell-Faser entsprechen.

Insbesondere lässt sich durch Mischen von verschiedenen Zusammensetzungen von Mischtextilien und/oder Ausgangsstoffen wie Altkleidern und/oder Resten aus der Kleiderherstellung, eine spezifische Eigenschaft, z.B. die Konzentration von synthetischem Kunststoff (z.B. Elastan) und optional zumindest einem weiteren synthetischen Kunststoff, einstellen und somit die nachfolgende Verwendung und/oder Funktionalisierung gezielt steuern.

In einer weiteren bevorzugten Ausführungsform werden verschiedene Ausgangsstoffe von unterschiedlicher Zusammensetzung derart gemischt, dass sich die gewünschten Anteile der unterschiedlichen Kunststoffe einstellen. In diesem Ausführungsbeispiel wird eine gewünschte Mischung lediglich durch eine Auswahl der Ausgangsstoffe erreicht. Es müssen also keine zusätzlichen Kunststoffe hinzugegeben werden, welche separat chemisch vorbehandelt werden müssten. Daher kann diese chemiereduzierte/chemiefreie Ausführungsvariante (nur durch Mischung von Ausgangsstoffen erreicht) vom Ressourcenverbrauch und aufgrund von ökologischen Aspekten her als besonders vorteilhaft angesehen werden.

Das Zuführen des weiteren Mischtextils kann während dem Zuführen des Mischtextils geschehen. Ferner kann das weitere Mischtextil, bzw. ein abgereichertes (bearbeitetes) Mischtextil zu einem späteren Zeitpunkt, z.B. während eines Lyocell-Verfahrens, zugeführt werden.

Gemäß einem weiteren Ausführungsbeispiel weist das Weiterverarbeiten ein Lyocell-Verfahren oder ein Viskose-Verfahren zum Erzeugen eines regenerierten cellulosischen Formkörpers auf. Dies hat den Vorteil, dass ein erprobtes und robustes Verfahren direkt angewendet werden kann. Das Lyocell-Verfahren ist in diesem Dokument ausführlich beschrieben.

Gemäß einem weiteren Ausführungsbeispiel weist der regenerierte cellulosische Formkörper zumindest eines der im Folgenden beschriebenen Merkmale auf.

Der regenerierte cellulosische Formkörper kann weniger als 0,5 % Polyethylenterephthalat (PET) und/oder mehr als 1 % Polyurethan (PUR) und/oder Polyamid (PA) aufweisen. Zumindest 2 % des Mischtextil-Anteils in dem regenerierten cellulosischen Formkörper können synthetischer Kunststoff sein.

Der regenerierte cellulosische Formkörper weist Festigkeitswerte einer üblichen Lyocell-Faser auf. Durchschnittliche Faserdaten einer üblichen Lyocellfaser (z.B. TENCEL^{®}) können wie folgt vorliegen. Höchstzugkraft konditioniert (FFk): 40,2 cN/dtex; Höchstzugkraft nass (FFn): 37,5 cN/dtex, Höchstzugkraftdehnung konditioniert (FDk): 13,0 %, Höchstzugkraftdehnung nass (FDn): 18,4 % (Quelle: Lenzinger Berichte 87 (2009) 98-105, Tabelle 1). Höchstzugkraft (FFk) kann also in dem Bereich 35 bis 45 cN/dtex, insbesondere 38 bis 42 cN/dtex, sein, Höchstzugkraft nass (FFn) in dem Bereich 32 bis 42 cN/dtex, insbesondere 35 bis 40 cN/dtex. Höchstkraftdehnung (FDk) kann in dem Bereich 10 bis 15 % liegen und Höchstzugkraft nass (FDn) in dem Bereich 16 bis 20 %.

Gemäß einem Ausführungsbeispiel kann der Anteil von synthetischem Kunststoff (Elastan, optional mit zusätzlichen Anteilen von z.B. PET, PUR und PA) in einer bestimmten Konzentration vorliegen. Dies kann zu einer besonders homogenen Verteilung in einer Spinnlösung führen, so dass sich der Kunststoff gleichmäßig im Spinnprozess in den herzustellenden (Lyocell)-Formkörper fein verteilt einlagert. Auf diese Weise können spezifische Fasereigenschaften entsprechend gesteuert bzw. beeinflusst werden.

Der regenerierte cellulosische Formkörper weist zudem eine reduzierte Tendenz zur Fibrillation auf. Die erstaunlicherweise derart erreichte niedrigere Fibrillationsneigung kann dadurch erklärt werden, dass eingebundene Restkunststoffe wie Polyester-Oligomere im Sinne einer separierenden (zumindest teilweise amorphen) Gleitschicht das Gleiten der einzelnen kristallinen Zellulosestränge unterstützen und zusätzlich die Querhaftung unter den Cellulosesträngen steuern. Dies kann bewirken, dass die fibrillationstypische Delamination entsprechend gehemmt wird. Anders ausgedrückt wirken Polyester-Oligomere, bzw. weitere synthetische Kunststoffe, als Schmelzkleber innerhalb der Faser. Unter Fibrillation kann insbesondere das örtlich begrenzte Abspalten fibrillärer Elemente längs der Faserachse verstanden werden. Dies insbesondere bei einer gleichzeitigen Einwirkung von Mechanik und Feuchtigkeit auf die Faser.

Gemäß einem bevorzugten Ausführungsbeispiel stammt der synthetische Kunststoff in dem Formkörper vorwiegend, insbesondere ausschließlich, von dem Mischtextil. Dies hat den Vorteil, dass der Formkörper besonders ressourcenschonend hergestellt werden kann. Der synthetische Kunststoff in dem Formkörper kann vollständig oder zumindest teilweise aus dem Ausgangsstoff stammen. Somit ist im Wesentlichen keine Zugabe von weiterem Kunststoff notwendig. Ferner kann auch zumindest teilweise auf ein aufwendiges Abreichern des Kunststoffs aus dem Ausgangsstoff verzichtet werden.

Gemäß einem bevorzugten Ausführungsbeispiel können die Konzentrationen von synthetischem Kunststoff, insbesondere Polyester, in dem regenerierten cellulosischen Formkörper in dem Bereich 0,1 bis 60 Gewichtsprozent, insbesondere 0,1 bis 15 Gewichtsprozent, bezogen auf die Cellulose, liegen.

Gemäß einem weitere Ausführungsbeispiel können die Kunststoffkonzentrationen am fertigen (Lyocell)-Formkörper innerhalb einer Genauigkeit von +/- 0,2 % nachgewiesen werden.

Gemäß einem Ausführungsbeispiel kann das Verfahren ein Nachbearbeiten der ausgefällten Cellulose zum Erhalten des Formkörpers aus der Vorform des Formkörpers aufweisen. Ein solches optionales Nachbearbeiten kann zum Beispiel ein Trocknen, Imprägnieren und/oder Umformen der erhaltenen Cellulose-Filamente aufweisen. Durch ein entsprechendes Nachbearbeiten ist es möglich, am Ende des Lyocell-Verfahrens anwendungsspezifisch die Formkörperherstellung abzuschließen.

Gemäß einem Ausführungsbeispiel können Fasern des Ausgangsstoffs und/oder Fasern des Formkörpers eine glatte runde Außenfläche aufweisen. Wie in Figur 3 dargestellt, zeichnen sich mittels des Lyocell-Verfahrens extrahierte Cellulosefasern durch eine derartige Form aus und heben sich daher von anderen Faserformen ab, wie sie in natürlicher Baumwolle vorkommen oder mittels eines Viskoseverfahrens erhalten werden.

Die erfindungsgemäß hergestellten Formkörper können zum Beispiel als Verpackungsmaterial, Fasermaterial, Textilverbundstoffe, Faserverbundstoffe, Faservliese, Nadelfilze, Polsterwatte, Gewebe, Gestricke, als Heimtextilien, wie Bettwäsche, als Kleidungsstücke, als Füllstoff, Beflockungsstoff, Krankenhaustextilien, wie Unterlagen, Windel oder Matratzen, als Stoff für Wärmedecken, Schuheinlagen, sowie Wundverbände verwendet werden. Ausführungsbeispiele der Erfindung können sowohl in verschiedensten technischen Bereichen als auch in der Medizin und in Kosmetik und Wellness anwendbar sein. In der Medizin können zum Beispiel Materialien zur Wundbehandlung und Wundheilung aus einem Träger, der die mechanischen Eigenschaften bestimmt, und einem biokompatiblem Beschichtungsmaterial aufgebaut sein, das besonders verträglich mit der Haut und mit der Oberfläche der Wunde ist. Zahlreiche andere Anwendungen sind möglich.

Im Folgenden werden exemplarische Ausführungsbeispiele der vorliegenden Erfindung mit Verweis auf die folgenden Figuren detailliert beschrieben.
Figur 1 zeigt ein Flussdiagramm eines Verfahrens zum Recyceln eines Mischtextils, wobei ein regenerierter cellulosischer Formkörpers hergestellt wird, gemäß einem exemplarischen Ausführungsbeispiel der Erfindung.
Figur 2 zeigt eine Apparatur zum Herstellen eines regenerierten cellulosischen Formkörpers mittels eines Lyocell-Verfahrens gemäß einem exemplarischen Ausführungsbeispiel der Erfindung.
Figur 3 zeigt eine mittels eines Lyocell-Verfahrens hergestellte Cellulosefaser.
Figur 4 zeigt eine mittels eines Viskose-Verfahrens hergestellte Cellulosefaser.
Figur 5 zeigt eine natürliche Cellulosefaser aus einer Baumwollpflanze.

Gleiche oder ähnliche Komponenten in unterschiedlichen Figuren sind mit gleichen Bezugsziffern versehen.

Bevor bezugnehmend auf die Figuren exemplarische Ausführungsbeispiele beschrieben werden, sollen einige grundlegende Überlegungen zusammengefasst werden, basierend auf denen exemplarische Ausführungsbeispiele der Erfindung abgeleitet worden sind.

Gemäß einem exemplarischen Ausführungsbeispiel der Erfindung wird ein selektives Abreichern von thermoplastischen Zusatzstoffen in Mischtextilien durchgeführt, so dass sie für die Herstellung eines (Lyocell)-Formkörpers wiederverwendet werden können. Dabei werden PET-Anteile stark und PUR-Anteile schwach reduziert. Es wird der Umstand genutzt, dass residuale Bestandteile von PUR im Rahmen des Lyocell-Verfahrens als positive Eigenschaft-Veränderer dienen können.

Gemäß einem weiteren exemplarischen Ausführungsbeispiel der Erfindung wird ein Recycling von Cellulose aus Mischgeweben (Mischtextilien) mit Polymeranteilen durch selektives Lösen und Abscheiden der Polymeranteile in einem Lösungsmittel, welches die Cellulose nicht angreift, durchgeführt.

Gemäß einem weiteren exemplarischen Ausführungsbeispiel der Erfindung wird durch die Rückgewinnung von Cellulose ein neues Lösungskonzept vorgeschlagen, welches auf einem typischerweise niedrigeren (< 50 %) Polymeranteil in einem Ausgangsstoff (Mischtextil) basiert. Dabei ist die Ausführung der Erfindung z.B. optimal, wenn es darum geht, Polymeranteile unter 30 % auf Werte im einstelligen Prozentbereich (allenfalls Promillebereich) abzureichern. Dies ist insbesondere dadurch besonders vorteilhaft, dass dabei im Gegensatz zu den bekannten Verfahren der Fokus nicht auf das Recycling der Kunststoffe gelegt wird, sondern auf die Verwertung der nicht-polymerischen Restbestandteile, insbesondere der Cellulose. Im Gegensatz dazu basieren bislang bekannte Verfahren darauf, dass die zu recycelnden Stoffe einen hohen bis sehr hohen Kunststoff-Anteil aufweisen. Hierbei kann von einem beispielhaft hohen Kunststoff-Anteil von 80 bis 90 % ein beachtlicher Teil von Polymeren zurückgewonnen werden. Im typischerweise thermisch weiterverwerteten Restmaterial wären dann immer noch bis zu 50 % Restpolymeranteil.

Gemäß einem weiteren exemplarischen Ausführungsbeispiel der Erfindung werden residuale Polymere aus Ausgangsstoffen als Haftungsverstärker unter Cellulosefasern oder als thermoplastischen Eigenschaftsverstärker innerhalb eines Lyocell-Formkörpers verwendet. Sie bleiben im Wesentlichen inert bis zur Fertigstellung eines bestimmten Schrittes im Produktionsprozess. Insbesondere lässt sich somit eine nachträgliche Versteifung eines Gewebes durch Wärme (analog Schmelzklebstoff) erreichen (z.B. bügelfreie Hemden, Plissieren, usw.). Zur Herstellung von Geweben, welche die Eigenschaft einer hoher Formstabilität haben (z.B. bügelfrei), wird üblicherweise ein aufwendiges Verfahren eingesetzt. Dies kann beispielsweise die Kombination sehr aufwendiger chemischer Verfahren sein. Sie lässt ein Hemd lange Zeit wie neu aussehen. Ebenso möglich ist die sogenannte "Feuchtvernetzung", bei der zwischen den Molekülen von Baumwollcellulose eine elastische Brücke gebaut wird. Diese Brücke zieht den Stoff nach dem Waschen wieder in Form.

Durch die gezielte Steuerung des Anteils von residualen Polymeren (z.B. Poylurethane aus Elastan von Mischtextilien) gemäß einer Ausführung der Erfindung lässt sich jedoch eine gewisse Thermoplastizität in einer Lyocellfaser erzielen, welche den entsprechenden Anteil von residualen Polymeren aus einem Ausgangsstoff via den Abreicherungsprozess, gemäß einer Ausführung der Erfindung, über ein Lyocell-Verfahren wieder in einen Lyocell-Formkörper zurückführt.

Gemäß einem weiteren exemplarischen Ausführungsbeispiel der Erfindung kann, das gute Einbindungsverhalten von bestimmten synthetischen Kunststoffen beschrieben werden durch eine Kompatibilität zwischen Cellulose und weiterem synthetischen Kunststoff wie Elastan, Polyamid oder Polyester. Der Polyethylenglykol (PEG)-Anteil in Elastan kann, wegen seiner typischen Ether-Struktur, für die gute Kompatibilität mit den Glycanether-Bindungen der Cellulose verantwortlich sein. Es findet zwischen den Stoffen also eine gute Homogenisierung/Mischung statt. Ein entsprechender Einbindungsprozess kann gemäß einem Ausführungsbeispiel zusätzlich stark von der Temperatur des jeweiligen Verfahrens abhängen.

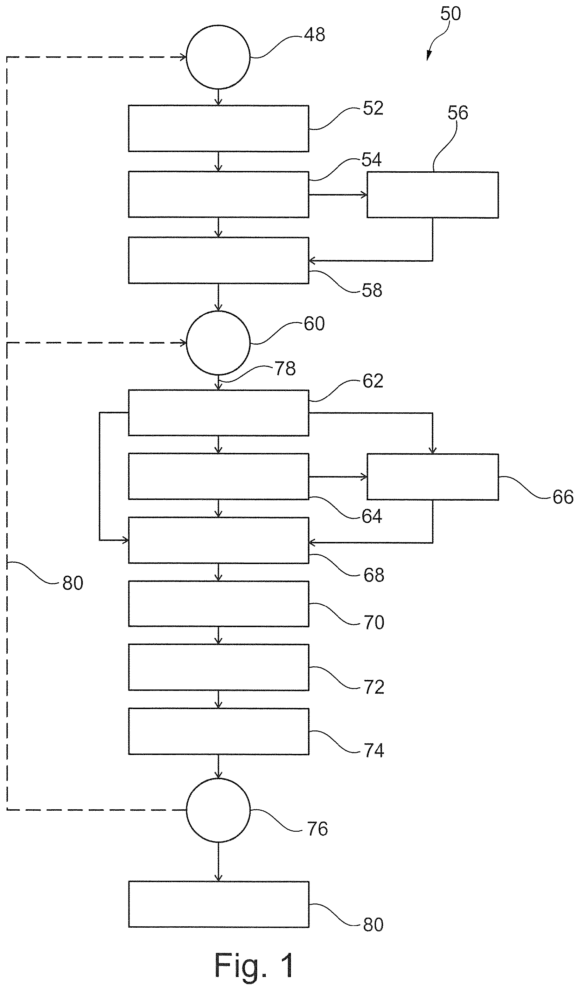

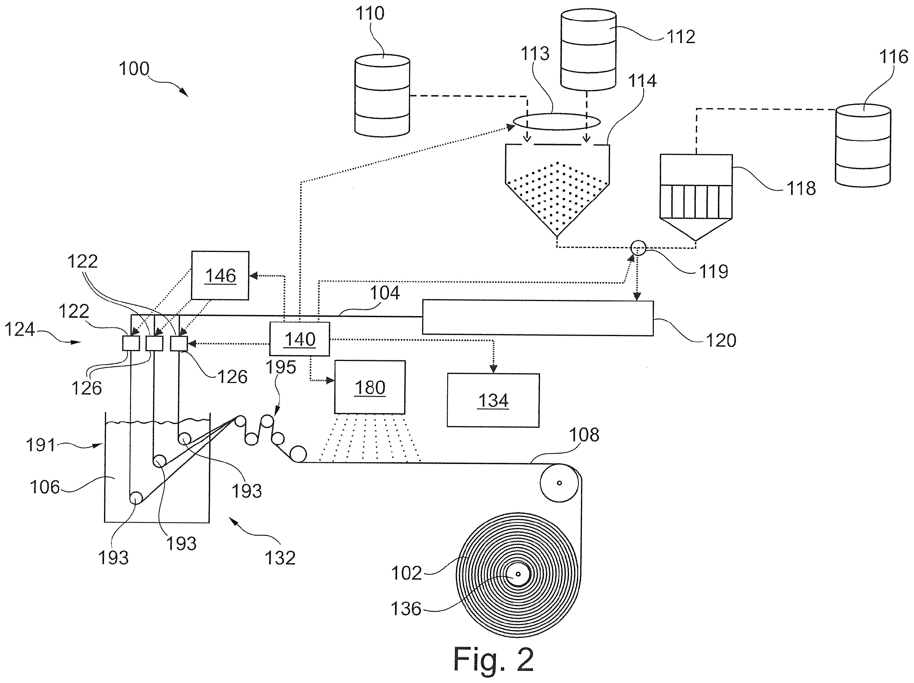

**Figur 1** zeigt ein Flussdiagramm 50 eines Verfahrens zum Herstellen eines regenerierten cellulosischen Formkörpers 102 (vergleiche Figur 2) aus einem Mischtextil 110 gemäß einem exemplarischen Ausführungsbeispiel der Erfindung.

Im Folgenden wird zunächst mittels der Blöcke 52, 54, 56 und 58 ein Abreicherungsverfahren für das Mischtextil 110 beschrieben. Das abgereicherte bzw. bearbeitete Mischtextil 60 kann dann einem Lyocell-Verfahren zugeführt 78 werden. Weiterhin wird dann das Lyocell-Verfahren mittels der Blöcke 62, 64, 66, 70, 72 und 74 beschrieben, um aus dem abgereicherten bzw. bearbeiteten Mischtextil 60 als Ausgangsstoff 110 einen regenerierten cellulosischen Formkörper 102 herzustellen. Das abgereicherte Mischtextil 60 weist gemäß einem bevorzugten Ausführungsbeispiel im Wesentlichen nur Cellulose auf. Gemäß einem weiteren Ausführungsbeispiel weist das abgereicherte Mischtextil 60 Cellulose und synthetischen Kunststoff auf.

Das Mischtextil 110 weist cellulosische Fasern und Fasern aus zumindest einem synthetischen Kunststoff auf und liegt in Form von Altkleidern und/oder Resten aus einer Kleidungsherstellung vor.

Wie mit Block 48 dargestellt, kann ein Mischtextil 110, im Falle von Altkleidern, durch einen Verbraucher verwendet werden, zum Beispiel als Kleidungsstück. Wenn der Verbraucher das Kleidungsstück entsorgt, kann dieses als Post-Consumer aufbereitet werden und dann als Ausgangsstoff für ein nachfolgendes Lyocell- oder Viskose-Verfahren verwendet werden, wobei ersteres im Weiteren näher beschrieben wird.

Es ist alternativ oder ergänzend ebenso möglich, ein Pre-Consumer Mischtextil 110 zu verwenden, zum Beispiel Verschnittreste aus der Kleidungsherstellung.

Zunächst wird gemäß Block 52 das Mischtextil 110 dem Abreicherungsprozess zugeführt. Es findet nun ein Abreichern 54 des Mischtextils statt, wobei zumindest ein synthetischer Kunststoff zumindest teilweise abgereichert wird. Dies kann ein Hydrolysieren oder ein Derivatisieren beinhalten. Besonders bevorzugt wird ein Lösungsmittel eingesetzt, welches die Cellulose nicht zersetzt. Auf diese Weise kann z.B. ein Polyester wie PET von der Cellulose abgereichert werden. Zwischen dem Abreichern 54 und dem folgenden Weiterverarbeiten 58 des Mischtextils 110 kann ein Reinigen 56 stattfinden. Hierdurch kann die Cellulose von überschüssigem Kunststoff oder anderen Fremdstoffen gereinigt werden. Das Weiterverarbeiten 58 weist insbesondere das Zuführen des abgereicherten Mischtextils 60 als Ausgangsstoff 110 zu einem Lyocell-Verfahren auf.

Im Weiteren wird beschrieben, wie auf Basis des abgereicherten Mischtextils 60 ein Formkörper 102 aus Cellulose gemäß einem Ausführungsbeispiel der Erfindung hergestellt werden kann. Hierfür wird das abgereicherte Mischtextil 60 einer Apparatur 100 (siehe Figur 2) zum Durchführen eines Lyocell-Verfahrens zugeführt, vergleiche Bezugszeichen 78. Im Folgenden wird das abgereicherte Mischtextil 60 als Ausgangsstoff 110 (vergleiche Figur 2) für das Lyocell-Verfahren bezeichnet.

Dort kann zunächst ein mechanisches Zerkleinern 62 des Ausgangsstoffs 110 durch Schreddern erfolgen. Dadurch können vor allem große nicht-cellulosische Störstoffe aus dem Ausgangsstoff 110 entfernt werden, beispielsweise Knöpfe, Nähte und Drucke der Altkleider, die zum Erzeugen des Ausgangsstoffs 110 zumindest teilweise verwendet worden sind. Durch das mechanische Zerkleinern 62 kann zum Beispiel der Ausgangsstoff 110 in Einzelfasern zertrennt werden. Hierbei ist zu beachten, dass das beschriebene mechanische Zerkleinern 62 gemäß einem weiteren Ausführungsbeispiel auch während des Abreicherungsprozesses durchgeführt werden kann, insbesondere vor dem Abreichern 54.

Es ist auch möglich (siehe Block 64), den Cellulose aufweisenden Ausgangsstoff 110 mit anderen Cellulose aufweisenden Materialien gemeinsam für das nachfolgende Lyocell-Verfahren einzusetzen. Somit kann der Ausgangsstoff 110 mit einem weiteren Ausgangsstoff vermischt werden, welcher Cellulose und zumindest einen synthetischen Kunststoff aufweist, siehe Block 64. Dieser zugeführte weitere Ausgangsstoff weist einen Anteil an synthetischen Kunststoffen auf, welcher von dem Anteil an synthetischem Kunststoff in dem Ausgangsstoff 110 verschieden ist. Das Erzeugen des regenerierten cellulosischen Formkörpers kann nun basierend auf dem Ausgangsstoff 110 und dem weiteren Ausgangsstoff ausgeführt werden, so dass der regenerierte cellulosischee Formkörper 102 einen vorbestimmten Anteil an synthetischem Kunststoff enthält. Der weitere Ausgangsstoff kann alternativ oder ergänzend zum Beispiel auch Reste aus einer Kleidungsherstellung aufweisen. Bevorzugt handelt es sich bei dem weiteren Ausgangsstoff ebenfalls um ein Mischtextil. Gemäß einem weiteren exemplarischen Ausführungsbeispiel kann das weitere Mischtextil auch während des Abreicherungsprozesses, insbesondere im Wesentlichen zeitgleich mit dem Zuführen 52 des Mischtextils 110, zugeführt werden.

Unmittelbar nach dem mechanischen Zerkleinern 62 bzw. unmittelbar nach dem Mischen 64 kann ein direktes Lösen 68 des (reinen bzw. gemischten) Ausgangsstoffs 110 in einem weiteren Lösungsmittel 116 (zum Beispiel tertiäre Aminoxide wie zum Beispiel N-Methylmorpholin-N-oxid (NMMO)) vorteilhaft ohne chemische Vorbehandlung erfolgen. Genauer gesagt kann der mechanisch zerkleinerte (und optional gemischte) Ausgangsstoff 110 insbesondere ohne chemische Reinigung und ohne Einstellung der Viskosität direkt in Lösung übergeführt werden. Auf diese Weise kann das Herstellungs- bzw. Recyclingverfahren außergewöhnlich einfach und schnell sowie umweltfreundlich durchgeführt werden. Es hat sich überraschenderweise herausgestellt, dass nach dem mechanischen Zerkleinern 62 in dem Ausgangsstoff 110 bestimmte synthetische Kunststoffe (z.B. Elastan, Polyamid) als verbleibender Fremdstoff das Lyocell-Verfahren nicht stört und die Qualität der wiedergewonnenen Lyocell-Cellulose nicht negativ beeinflusst. Im Gegenteil, gewisse Mengen von bestimmten synthetischen Kunststoffen können in den hergestellten Cellulosefasern verbleiben ohne deren Eigenschaften zu verschlechtern, sondern um diese sogar zu verbessern. Auch gewisse Mengen verbleibenden Polyesters stören das erhaltene Produkt nicht, sondern können sogar die mechanische Integrität des herzustellenden Formkörpers 102 stärken.

Alternativ kann das Verfahren nach dem mechanischen Zerkleinern 62 (oder nach dem Mischen 64) und vor dem Lösen 68 ein optionales chemisches Reinigen 66 des Ausgangsstoffs 110 aufweisen. Ein solches optionales Reinigen 66 kann zum Beispiel ein zumindest teilweises Entfernen von Farbstoffen durch Bleichen aufweisen. Dadurch ist es möglich, den Ausgangsstoff 110 vor einem nachfolgenden Lösen 68 des Ausgangsstoffs 110 in Lösungsmittel 116 ganz oder teilweise zu entfärben, beispielsweise um weiße oder graue Formkörper 102 herzustellen. Es ist alternativ oder ergänzend auch möglich, dass im Rahmen des optionalen chemischen Reinigens 66 der Ausgangsstoff 110 (vor oder nach seinem Lösen 68) zumindest teilweise von Fasern des Ausgangsstoffs 110 vernetzenden Vernetzern befreit wird. In Anwendungen, in denen solche Vernetzer zwischen den Fasern des Ausgangsstoffs 110 vorliegen, kann der Ausgangsstoff 110 zum Beispiel mittels einer alkalischen oder einer sauren Vorbehandlung von diesen Vernetzern ganz oder teilweise befreit werden. Dies verbessert die Lösbarkeit des Ausgangsstoffs 110 zusätzlich. Mittels des Reinigens 66 kann optional zumindest ein Teil von synthetischem Kunststoff entfernt werden, falls dies gewünscht ist. Beispielsweise kann auf diese Weise der Anteil von synthetischem Kunststoff in dem herzustellenden Formkörper 102 eingestellt bzw. beeinflusst werden. Gemäß einem weiteren exemplarischen Ausführungsbeispiel kann das Reinigen 56 während des Abreicherungsprozesses auf die gleiche Weise durchgeführt werden. Weiterhin kann das Reinigen 66 unnötig werden, wenn bereits während des Abreicherungsprozesses ein Reinigen 56 stattgefunden hat.

Nach dem Lösen 68 des Ausgangsstoffs 110 in Lösungsmittel (bevorzugt NMMO) kann die erhaltene Lyocell-Spinnlösung 104 durch eine oder mehrere Spinndüsen gepresst werden, wodurch Fäden bzw. Filamente honigzäher Viskosität entstehen (siehe Block 70, der dieses Spinnen betrifft).

Während und/oder nach dem Fallen dieser Fäden bzw. Filamente werden diese in Wirkverbindung mit einem wässrigen Milieu gebracht und dadurch verdünnt. Die Konzentration des Lösungsmittels 116 der Fäden bzw. Filamente wird dadurch in einem wässrigen Nebel bzw. einem wässrigen Flüssigkeitsbad so weit reduziert, dass die Lyocell-Spinnlösung in eine feste Phase aus Cellulose-Filamenten überführt wird. Anders ausgedrückt kommt es zu einem Präzipitieren, Fällen oder Koagulieren der Cellulose-Filamente, siehe Bezugszeichen 72. Dadurch wird eine Vorform des Formkörpers 102 erhalten.

Das Erzeugen 80 des regenerierten cellulosischen Formkörpers 102, insbesondere das Lösen 68, das Spinnen 70 und das nachfolgende Ausfällen 72, mittels eines Lyocell-Verfahrens wird also basierend auf einem abgereicherten Mischtextil 60 als Ausgangsstoff 110 durchgeführt, welches seinerseits Cellulose und optional synthetischen Kunststoff aufweist.

Ferner kann das Verfahren ein Nachbearbeiten 74 der ausgefällten Lyocell-Cellulose zum Erhalten des Formkörpers 102 aus der Vorform des Formkörpers 102 aufweisen. Eine solche Nachbearbeitung kann zum Beispiel ein Trocknen, Imprägnieren und/oder Umformen der erhaltenen Filamente zu dem finalen Formkörper 102 umfassen. Zum Beispiel kann der Formkörper 102 durch das beschriebene Herstellungsverfahren zu Fasern, einer Folie, einem Gewebe, einem Vlies, einer Kugel, einem porösen Schwamm oder Beads verarbeitet werden und dann einer weiteren Nutzung zugeführt werden (vergleiche Bezugszeichen 76).

Mit Vorteil können nach Nutzung des Formkörpers 102 dessen Cellulose (und optional dessen synthetischer Kunststoff) von neuem wiedergewonnen werden, indem ein weiteres Verfahren entsprechend der Verfahrensschritte zwischen Bezugszeichen 48 und 74 bzw. zwischen 78 und 74 durchgeführt wird (siehe Block 80). Alternativ können die Cellulose und optionaler weiterer synthetischer Kunststoff des Formkörpers 102 in einem anderen Verfahren (siehe weitere Block 80), beispielsweise einem Viskose-Verfahren, wiedergewonnen werden. Diese mehrfache Wiederholbarkeit des Recyclings mittels wiederholter Verfahrensstufen wird durch die Erkenntnis ermöglicht, dass Cellulose aus einem Mischtextil durch zumindest teilweises, selektives Abreichern von KunststoffAnteilen besonders effizient in einem Recycling-Verfahren verwendet werden kann.

**Figur 2** zeigt eine Apparatur 100 zum Herstellen eines regenerierten cellulosischen Formkörpers 102 mittels eines Lyocell-Verfahrens auf Basis eines Ausgangsstoffs 110, welcher ein abgereichertes bzw. bearbeitetes Mischtextil 60 ist, gemäß einem exemplarischen Ausführungsbeispiel der Erfindung, das bezugnehmend auf Figur 1 beschrieben wurde.

Figur 2 zeigt also eine Apparatur 100 gemäß einem exemplarischen Ausführungsbeispiel der Erfindung zum Herstellen eines Cellulose aufweisenden Formkörpers 102, der zum Beispiel in Form eines Vlieses (Nonwoven), als Faser, Folie, Kugel, Textilgewebe, Schwamm oder in Form von Beads oder Flakes hergestellt werden kann. Gemäß Figur 2 wird der Formkörper 102 direkt aus einer Spinnlösung 104 hergestellt. Letztere wird mittels eines Koagulations-Fluids 106 (insbesondere aus Luftfeuchtigkeit) und/oder eines Koagulations-Bads 191 (beispielsweise ein Wasserbad, das optional tertiäre Aminoxide wie zum Beispiel N-Methylmorpholin-N-oxid (NMMO) aufweist) in Cellulosefasern 108 als Formkörper 102 umgewandelt. Mittels der Apparatur 100 kann ein Lyocell-Verfahren ausgeführt werden. Auf diese Weise können als Formkörper 102 zum Beispiel im Wesentlichen endlose Filamente oder Fasern 108 oder Mischungen im Wesentlichen endloser Filamente und Fasern 108 diskreter Länge hergestellt werden. Eine Mehrzahl von Düsen, die jeweils eine oder mehrere Öffnungen 126 (die auch als Spinnlöcher bezeichnet werden können) haben, sind bereitgestellt, um Lyocell-Spinnlösung 104 auszustoßen.

Wie Figur 2 entnommen werden kann, kann einem Speichertank 114 über eine Dosiereinrichtung 113 ein Cellulose basierter Ausgangsstoff 110 zugeführt werden.

Gemäß einem Ausführungsbeispiel kann ein Wassereintrag in den Cellulose basierten Ausgangsstoff 110 durch ein unten näher beschriebenes Lösungsmittel 116 (insbesondere NMMO) erfolgen. Auch kann der Cellulose basierte Ausgangsstoff 110 selbst bereits eine gewisse Restfeuchte enthalten (trockener Zellstoff zum Beispiel hat häufig eine Restfeuchte von 5 Gewichtsprozent bis 8 Gewichtsprozent). Insbesondere kann gemäß dem beschriebenen Ausführungsbeispiel der Ausgangsstoff 110 ohne Vorbefeuchtung direkt in eine Mischung aus Wasser und Lösungsmittel 116 gegeben werden. Ein in Figur 2 gezeigter optionaler Wasserbehälter 112 kann dann weggelassen werden.

Gemäß einem alternativen Ausführungsbeispiel kann der Cellulose aufweisende Ausgangsstoff 110 zusätzlich angefeuchtet werden, um dadurch feuchte Cellulose bereitzustellen. Zu diesem Zweck kann Wasser aus einem optionalen Wasserbehälter 112 dem Speichertank 114 über die Dosiereinrichtung 113 zugeführt werden. Daher kann die Dosiereinrichtung 113, gesteuert mittels einer Steuereinrichtung 140, dem Speichertank 114 einstellbare relative Mengen von Wasser und Ausgangsstoff 110 zuführen.

Ein geeignetes Lösungsmittel 116, bevorzugt tertiäre Aminoxide wie zum Beispiel N-Methylmorpholin-N-oxid (NMMO), beziehungsweise eine wässrige Mischung des Lösungsmittels 116, zum Beispiel eine 76%ige Lösung von NMMO in Wasser, ist in einem Lösungsmittelbehälter enthalten. Die Konzentration des Lösungsmittels 116 kann in einer Konzentriereinrichtung 118 entweder durch Zugabe von reinem Lösemittel oder Wasser eingestellt werden. Das Lösungsmittel 116 kann dann mit dem Ausgangsstoff 110 mit definierbaren relativen Mengen in einer Mischeinheit 119 gemischt werden. Auch die Mischeinheit 119 kann mittels der Steuereinheit 140 gesteuert werden. Dadurch wird der Cellulose aufweisende Ausgangsstoff 110 in dem konzentrierten Lösungsmittel 116 in einer Löseeinrichtung 120 mit einstellbaren relativen Mengen gelöst, wodurch die Lyocell-Spinnlösung 104 erhalten wird.. Die relativen Konzentrationsbereiche (auch als Spinnfenster bezeichnet) der Komponenten Ausgangsstoff 110, Wasser und Lösungsmittel 116 in der Spinnlösung 104 zur Herstellung von cellulosischen Regeneratformkörpern nach dem Lyocell-Verfahren können, wie einem Fachmann bekannt, geeignet eingestellt werden.

Die Lyocell-Spinnlösung 104 wird einer Fasererzeugungseinrichtung 124 zugeführt (die mit einer Anzahl von Spinnbalken oder Jets 122 ausgebildet sein kann).

Wenn die Lyocell-Spinnlösung 104 durch die Öffnungen 126 der Jets 122 geführt wird, wird sie in eine Mehrzahl von parallelen Fäden aus Lyocell-Spinnlösung 104 aufgeteilt. Die beschriebene Prozessführung transformiert die Lyocell-Spinnlösung 104 in zunehmend lange und dünne Fäden, deren Eigenschaften durch entsprechende Einstellung der Prozessbedingungen, gesteuert durch die Steuereinheit 140, eingestellt werden können. Optional kann ein Gasfluss die Lyocell-Spinnlösung 104 auf ihrem Weg von den Öffnungen 126 zu einer Faseraufnahmeeinheit 132 beschleunigen.

Nachdem die Lyocell-Spinnlösung 104 sich durch die Jets 122 und weiter abwärts bewegt hat, interagieren die langen und dünnen Fäden der Lyocell-Spinlösung 104 mit dem Koagulations-Fluid 106.

Bei der Wechselwirkung mit dem Koagulations-Fluid 106 (zum Beispiel Wasser) wird die Lösungsmittelkonzentration der Lyocell-Spinnlösung 104 reduziert, sodass die Cellulose des Ausgangsstoffs 110 zumindest teilweise als lange und dünne Cellulosefasern 108 (die immer noch Reste von Lösungsmittel und Wasser enthalten können) koaguliert bzw. ausfällt.

Während oder nach der initialen Bildung der individuellen Cellulosefasern 108 aus der extrudierten Lyocell-Spinnlösung 104 werden die Cellulosefasern 108 an der Faseraufnahmeeinheit 132 aufgenommen. Die Cellulosefasern 108 können in das in Figur 2 dargestellte Koagulations-Bad 191 (zum Beispiel ein Wasserbad, optional aufweisend ein Lösungsmittel wie NMMO) eintauchen und können bei Wechselwirkung mit der Flüssigkeit des Koagulations-Bads 191 ihr Ausfällen abschließen. Abhängig von der Prozesseinstellung der Koagulation kann die Cellulose Cellulosefasern 108 bilden (wie gezeigt, wobei die Cellulosefasern 108 einstoffig bzw. integral miteinander verschmolzen ("merging") sein können oder als getrennte Cellulosefasern 108 vorliegen können) oder kann sich an der Faseraufnahmeeinheit 132 eine Folie bzw. ein Film aus Cellulose bilden (nicht in Figur 2 dargestellt).

Die Cellulosefasern 108 werden also aus den Spinndüsen der Jets 122 extrudiert und durch das Spinnbad bzw. Koagulations-Bad 191 (enthaltend zum Beispiel Wasser und NMMO in niedriger Konzentration zur Ausfällung/Koagulation) geführt, dabei werden die Cellulosefasern 108 um eine jeweilige Umlenkrolle 193 im Koagulations-Bad 191 geführt und außerhalb des Koagulations-Bads 191 einer Abzugsgalette 195 zugeführt. Die Abzugsgalette 195 sorgt für Weitertransport und Nachverstreckung der Cellulosefasern 108, um einen gewünschten Titer zu erreichen. Nach der Abzugsgalette 195 wird das Faserbündel aus den Cellulosefasern 108 in einer Wascheinheit 180 gewaschen, gegebenenfalls aviviert und schließlich geschnitten (nicht gezeigt).

Obwohl dies in Figur 2 nicht dargestellt ist, kann Lösungsmittel 116 der Lyocell-Spinnlösung 104, das aus den Cellulosefasern 108 beim Koagulieren und bei einem nachfolgenden Waschen in der Wascheinheit 180 entfernt worden ist, zumindest teilweise zurückgewonnen bzw. recycelt werden und in einem nachfolgenden Zyklus wieder in den Speichertank 114 übergeführt werden.

Während des Transports entlang der Faseraufnahmeeinheit 132 kann der Formkörper 102 (hier in Form der Cellulosefasern 108) mittels der Wascheinheit 180 gewaschen werden, indem Letztere eine Waschflüssigkeit zum Entfernen von Lösungsmittelresten zuführt. Danach kann der Formkörper 102 getrocknet werden.

Der Formkörper 102 kann darüber hinaus einer Nachbehandlung unterzogen werden, siehe die schematisch dargestellte Nachbehandlungseinheit 134. Zum Beispiel kann eine solche Nachbehandlung eine Hydroverschlingung, eine Nadelbehandlung, eine Imprägnierung, eine Dampfbehandlung mit einem unter Druck zugeführten Dampf und/oder ein Kalandrieren, etc., aufweisen.

Die Faseraufnahmeeinheit 132 kann den Formkörper 102 einer Aufwickeleinrichtung 136 zuführen, an welcher der Formkörper 102 aufgewickelt werden kann. Der Formkörper 102 kann dann als Rollgut einer Entität zugeführt werden, die Produkte wie zum Beispiel Wischtücher oder Textilien auf Basis des Formkörpers 102 herstellt.

**Figur 3** zeigt eine mittels eines Lyocell-Verfahrens hergestellte Cellulosefaser 200 im Querschnitt. Die mittels eines Lyocell-Verfahrens hergestellte Cellulosefaser 200 hat eine glatte runde Außenfläche 202 und ist homogen und frei von makroskopischen Löchern mit Cellulosematerial ausgefüllt. Sie kann daher von einem Fachmann eindeutig von mittels eines Viskoseverfahrens hergestellten Cellulosefasern (siehe Bezugszeichen 204 in Figur 4) und von Cellulosefasern aus Baumwollpflanzen (siehe Bezugszeichen 206 in Figur 5) unterschieden werden.

**Figur 4** zeigt eine mittels eines Viskoseverfahrens hergestellte Cellulosefaser 204 im Querschnitt. Die Cellulosefaser 204 ist wolkenförmig und weist entlang ihres äußeren Umfangs eine Mehrzahl von bogenförmigen Strukturen 208 auf.

**Figur 5** zeigt eine natürliche Cellulosefaser 206 aus einer Baumwollpflanze im Querschnitt. Die Cellulosefaser 206 ist nierenförmig und weist im Inneren ein materialfreies Lumen 210 als vollumfänglich umschlossenen Hohlraum auf.

Anhand der signifikanten geometrischen bzw. strukturellen Unterschiede der Fasern gemäß Figur 3 bis Figur 5 ist es einem Fachmann möglich, zum Beispiel unter einem Mikroskop unzweideutig zu ermitteln, ob eine Cellulosefaser mittels des Lyocell-Verfahrens, mittels des Viskoseverfahrens oder natürlich in einer Baumwollpflanze gebildet worden ist.

Ergänzend ist darauf hinzuweisen, dass "aufweisend" keine anderen Elemente oder Schritte ausschließt und "eine" oder "ein" keine Vielzahl ausschließt. Ferner sei darauf hingewiesen, dass Merkmale oder Schritte, die mit Verweis auf eines der obigen Ausführungsbeispiele beschrieben worden sind, auch in Kombination mit anderen Merkmalen oder Schritten anderer oben beschriebener Ausführungsbeispiele verwendet werden können. Bezugszeichen in den Ansprüchen sind nicht als Einschränkung anzusehen.

## Patentansprüche

1. Verfahren zum Recyceln eines Mischtextils (110), wobei das Verfahren aufweist:
Zuführen (52) des Mischtextils (110), wobei das Mischtextil (110) cellulosische Fasern und synthetische Fasern aufweist, wobei die synthetischen Fasern zumindest einen synthetischen Kunststoff aufweisen;
Abreichern (54) des synthetischen Kunststoffs von der Cellulose, wobei das Abreichern aufweist:
teilweises Behalten eines synthetischen Kunststoffs in dem Mischtextil (110),
wobei das Mischtextil (110) einen ersten synthetischen Kunststoff aufweist, wobei das Mischtextil (110) einen zweiten synthetischen Kunststoff aufweist, und wobei das Abreichern (54) ferner aufweist:
Abreichern (54) von dem ersten synthetischen Kunststoff auf einen ersten Konzentrationswert, und
Abreichern (54) von dem zweiten synthetischen Kunststoff auf einen zweiten Konzentrationswert,
wobei der erste Konzentrationswert größer als der zweite Konzentrationswert ist; und
Weiterverarbeiten (58) des abgereicherten Mischtextils (60) nach dem Abreichern.

2. Verfahren gemäß Anspruch 1, wobei der synthetische Kunststoff zumindest einer aus der Gruppe ist, welche besteht aus Polyester, Polyamid, Polyurethan, Polyether und Elastan.

3. Verfahren gemäß Anspruch 1 oder 2, wobei das Mischtextil (110) Cellulose in Form von Baumwolle aufweist oder daraus besteht.

4. Verfahren gemäß einem der vorhergehenden Ansprüche,
wobei das Mischtextil (110) ganz oder teilweise Reste aus einer Kleidungsherstellung und/oder Altkleider aufweist.

5. Verfahren gemäß einem der vorhergehenden Ansprüche, ferner aufweisend:
Reinigen (56) der Cellulose, wobei das Reinigen (56) zwischen dem Abreichern (54) und dem Weiterverarbeiten (58) stattfindet.

6. Verfahren gemäß einem der vorhergehenden Ansprüche,
wobei das Abreichern (54) ferner aufweist:
selektives Abreichern (54) zumindest eines synthetischen Kunststoffs aus dem Mischtextil (110), welcher
aus der Gruppe ist, welche besteht aus Polyamid, Polyester, Polypropylen, Polyurethan und Elastan.

7. Verfahren gemäß einem der vorhergehenden Ansprüche, wobei das Abreichern (54) ferner aufweist:
vollständiges Entfernen (54) zumindest eines synthetischen Kunststoffs aus dem Mischtextil (110), insbesondere Polyester und/oder Elastan.

8. Verfahren gemäß einem der vorhergehenden Ansprüche, wobei das Abreichern (54) ferner aufweist:
teilweises Behalten eines synthetischen Kunststoffs in dem Mischtextil (110), welcher
aus der Gruppe ist, welche besteht aus Polyamid, Polyester, Polyurethan und Elastan.

9. Verfahren gemäß einem der vorhergehenden Ansprüche,
wobei der erste synthetische Kunststoff Polyamid und/oder Polyurethan aufweist; und/oder
wobei der zweite synthetische Kunststoff Polyester, insbesondere Polyethylenterephthalat, PET, und/oder Polypropylen aufweist.

10. Verfahren gemäß einem der vorhergehenden Ansprüche, wobei das Abreichern (54) ferner aufweist:
mechanisches Trennen, insbesondere aufgrund des Dichte-Unterschieds; und/oder
chemisches Trennen, welches zumindest eines aus der Gruppe aufweist, welche besteht aus Hydrolysieren, Derivatisieren und Verwenden eines Lösungsmittels,
insbesondere eines Lösungsmittels, welches Cellulose nicht zersetzt.

11. Das Verfahren gemäß einem der vorhergehenden Ansprüche,
wobei das Weiterverarbeiten (58) ein Lyocell-Verfahren oder ein Viskose-Verfahren zum Erzeugen eines regenerierten cellulosischen Formkörpers (102) aufweist.

12. Regenerierter cellulosischer Formkörper (102), welcher gemäß dem Verfahren nach einem der vorherigen Ansprüche hergestellt ist,
wobei der regenerierte cellulosische Formkörper (102) ausgewählt ist aus der Gruppe, welche aufweist ein Filament, eine Faser, eine Folie, eine Mikrokugel oder ein Bead;
wobei der regenerierte cellulosische Formkörper (102) Cellulose, insbesondere Cellulose und synthetischen Kunststoff, des abgereicherten Mischtextils (60) aufweist; und
wobei der regenerierte cellulosische Formkörper (102) zumindest eines der folgenden Merkmale aufweist:
der regenerierte cellulosische Formkörper (102) weist weniger als 0,5 % Polyethylenterephthalat, PET, und/oder mehr als 1 % Polyurethan, PUR, und/oder Polyamid, PA, auf;
zumindest 2 % des Mischtextil-Anteil in dem regenerierten cellulosischen Formkörper (102) ist synthetischer Kunststoff;
der regenerierte cellulosische Formkörper (102) weist eine reduzierte Tendenz zur Fibrillation im Vergleich zu einer üblichen Lyocellfaser auf, wobei eine übliche Lyocellfaser zumindest eine der folgenden Eigenschaften aufweist:
die Höchstzugkraft, FFk, ist in dem Bereich 35 bis 45 cN/dtex,
die Höchstzugkraft nass, FFn, ist dem Bereich 32 bis 42 cN/dtex,
die Höchstkraftdehnung, FDk, ist in dem Bereich 10 bis 15 %,
die Höchstzugkraftdehnung nass, FDn, ist in dem Bereich 16 bis 20 %.

## Claims

1. A method of recycling a mixed textile (110), wherein the method comprises:
feeding (52) the mixed textile (110), wherein the mixed textile (110) comprises cellulosic fibers and synthetic fibers, wherein the synthetic fibers comprise at least one synthetic plastic;
depleting (54) the synthetic plastic from the cellulose,
wherein the depleting comprises:
partially retaining a synthetic plastic in the mixed textile (110),
wherein the mixed textile (110) comprises a first synthetic plastic, wherein the mixed textile (110) comprises a second synthetic plastic, and wherein the depleting (54) further comprises:
depleting (54) from the first synthetic plastic to a first concentration value, and
depleting (54) from the second synthetic plastic to a second concentration value,
wherein the first concentration value is larger than the second concentration value; and
further processing (58) the depleted mixed textile (60) after the depleting.

2. The method of claim 1,
wherein the synthetic plastic is at least one of the group consisting of polyester, polyamide, polyurethane, polyether, and elastane.

3. The method of claim 1 or 2,
wherein the mixed textile (110) comprises or consists of cellulose in the form of cotton.

4. The method of any one of the preceding claims,
wherein the mixed textile (110) completely or partially comprises residues from clothing manufacture and/or used clothes.

5. The method of any one of the preceding claims, further comprising:
cleaning (56) the cellulose, wherein the cleaning (56) takes place between the depleting (54) and the further processing (58).

6. The method of any one of the preceding claims,
wherein the depleting (54) further comprises:
selectively depleting (54) at least one synthetic plastic from the mixed textile (110),
which is selected from the group consisting of polyamide, polyester, polypropylene, polyurethane, and elastane.

7. The method of any one of the preceding claims, wherein the depleting (54) further comprises:
completely removing (54) at least one synthetic plastic from the mixed textile (110), in particular polyester and/or elastane.

8. The method of any one of the preceding claims, wherein the depleting (54) further comprises:
partially retaining a synthetic plastic in the mixed textile (110),
which is selected from the group consisting of polyamide, polyester, polyurethane, and elastane.

9. The method of any one of the preceding claims,
wherein the first synthetic plastic comprises polyamide and/or polyurethane; and/or
wherein the second synthetic plastic comprises polyester, in particular polyethylene terephthalate, PET, and/or polypropylene.

10. The method of any one of the preceding claims, wherein the depleting (54) further comprises:
mechanically separating, in particular due to the density difference; and/or
chemically separating, which comprises at least one of the group consisting of hydrolyzing, derivatizing, and using a solvent,
in particular a solvent that does not decompose cellulose.

11. The method of any one of the preceding claims,
wherein the further processing (58) comprises a lyocell method or a viscose method for producing a regenerated cellulosic molded body (102).

12. A regenerated cellulosic molded body (102) produced according to the method of any one of the preceding claims, wherein
the regenerated cellulosic molded body (102) is selected from the group comprising a filament, a fiber, a film, a microsphere, or a bead;
wherein the regenerated cellulosic molded body (102) comprises cellulose, in particular cellulose and synthetic plastic, of the depleted mixed textile (60); and wherein the regenerated cellulosic molded body (102) comprises at least one of the following features:
the regenerated cellulosic molded body (102) comprises less than 0.5% polyethylene terephthalate, PET, and/or more than 1% polyurethane, PUR, and/or polyamide, PA;
at least 2% of the mixed textile portion in the regenerated cellulosic molded body (102) is synthetic plastic;
the regenerated cellulosic molded body (102) has a reduced tendency to fibrillation compared to a conventional lyocell fiber, wherein a conventional lyocell fiber has at least one of the following properties:
the maximum tensile force, FFk, is in the range 35 to 45 cN/dtex,
the maximum wet tensile force, FFn, is in the range 32 to 42 cN/dtex,
the maximum elongation, FDk, is in the range 10 to 15%,
the maximum wet tensile elongation, FDn, is in the range 16 to 20%.

## Revendications

1. Procédé de recyclage d'un textile mélangé (110), dans lequel le procédé comprend les étapes consistant à :
alimenter (52) le textile mélangé (110), dans lequel le textile mélangé (110) présente des fibres cellulosiques et des fibres synthétiques, dans lequel les fibres synthétiques contiennent au moins une matière synthétique ;
réduire la part (54) de matière synthétique par rapport à la cellulose, dans lequel ladite réduction comprend l'étape consistant à :
conserver partiellement une matière synthétique dans le textile mélangé (110),
dans lequel le textile mélangé (110) présente une première matière synthétique, dans lequel le textile mélangé (110) présente une deuxième matière synthétique, et dans lequel ladite réduction (54) comprend en outre les étapes consistant à :
réduire la part (54) de première matière synthétique jusqu'à une première valeur de concentration, et
réduire la part (54) de deuxième matière synthétique jusqu'à une deuxième valeur de concentration,
dans lequel la première valeur de concentration est supérieure à la deuxième valeur de concentration ; et
retraiter (58), après ladite réduction, le textile mélangé (60) réduit.

2. Procédé selon la revendication 1,
dans lequel la matière synthétique est au moins une parmi le groupe constitué de polyester, polyamide, polyuréthane, polyéther et élasthanne.

3. Procédé selon la revendication 1 ou 2,
dans lequel le textile mélangé (110) présente de la cellulose sous forme de coton ou en est constitué.

4. Procédé selon l'une quelconque des revendications précédentes,
dans laquelle le textile mélangé (110) présente entièrement ou partiellement des résidus de la fabrication de vêtements et/ou des vêtements usagés.

5. Procédé selon l'une quelconque des revendications précédentes, comprenant en outre l'étape consistant à :
nettoyer (56) la cellulose, dans lequel le nettoyage (56) a lieu entre la réduction (54) et le retraitement (58).

6. Procédé selon l'une quelconque des revendications précédentes, dans lequel la réduction (54) comprend en outre l'étape consistant à :
réduire de manière sélective la part (54) d'au moins une matière synthétique, appartenant au groupe constitué de polyamide, polyester, polypropylène, polyuréthane et élasthanne, dans le textile mélangé (110).

7. Procédé selon l'une quelconque des revendications précédentes, dans lequel la réduction (54) comprend en outre l'étape consistant à :
éliminer complètement (54) au moins une matière synthétique du textile mélangé (110), en particulier le polyester et/ou l'élasthanne.

8. Procédé selon l'une quelconque des revendications précédentes, dans lequel la réduction (54) comprend en outre l'étape consistant à :
conserver partiellement dans le textile mélangé (110) une matière synthétique faisant partie du groupe constitué de polyamide, polyester, polyuréthane et élasthanne.

9. Procédé selon l'une quelconque des revendications précédentes, dans lequel la première matière synthétique présente du polyamide et/ou du polyuréthane ; et/ou
dans lequel la deuxième matière synthétique présente du polyester, en particulier du polyéthylène téréphtalate, du PET et/ou du polypropylène.

10. Procédé selon l'une quelconque des revendications précédentes, dans lequel la réduction (54) comprend en outre les étapes consistant à :
séparer mécaniquement, en particulier en se basant sur la différence de densité ; et/ou
séparer chimiquement, laquelle étape comprend au moins une étape parmi le groupe constitué de l'hydrolyse, la dérivatisation et l'utilisation d'un solvant, en particulier d'un solvant qui ne décompose pas la cellulose.

11. Procédé selon l'une quelconque des revendications précédentes, dans lequel le retraitement (58) comprend un procédé Lyocell ou un procédé viscose permettant de produire un corps moulé cellulosique régénéré (102).

12. Corps moulé cellulosique régénéré (102) fabriqué grâce au procédé selon l'une quelconque des revendications précédentes,
dans lequel le corps moulé cellulosique régénéré (102) est choisi parmi le groupe constitué d'un filament, d'une fibre, d'un film, d'une microsphère ou d'une perle ;
dans lequel le corps moulé cellulosique régénéré (102) présente de la cellulose, en particulier de la cellulose et de la matière synthétique, du textile mélangé (60) réduit ; et
dans lequel le corps moulé cellulosique régénéré (102) présente au moins une des caractéristiques ci-dessous :
le corps moulé cellulosique régénéré (102) présente moins de 0,5 % de polyéthylène téréphtalate, PET, et/ou plus de 1 % de polyuréthane, PUR, et/ou de polyamide, PA ;
au moins 2 % de la proportion de textile mélangé dans le corps moulé cellulosique régénéré (102) est de la matière synthétique ;
le corps moulé cellulosique régénéré (102) présente une tendance réduite à la fibrillation en comparaison d'une fibre lyocell habituelle, dans lequel une fibre lyocell habituelle présente au moins une des caractéristiques ci-dessous :
la force maximale à la traction, FFk, se situe dans la plage comprise entre 35 et 45 cN/dtex,
la force maximale à la traction à l'état humide, FFn, se situe dans la plage comprise entre 32 et 42 cN/dtex,
l'allongement à la force maximale, FDk, se situe dans la plage comprise entre 10 et 15 %,
l'allongement à la force maximale à l'état humide, FDn, se situe dans la plage comprise entre 16 et 20 %.
